# EUROPEAN PATENT APPLICATION

(11) **EP 3 276 555 A1**
(43) Date of publication of application: **31.01.2018**
(21) Application number: 17179477.9
(22) Date of filing: 04.07.2017
(51) Int. Cl.: G06Q 20/20, G06Q 20/32

(54) **MOBILE PAYMENT METHOD AND SYSTEM**

(30) Priority: 28.07.2016 GB 201613080
(71) Applicant: Mastercard International Incorporated, Purchase NY 10577 (US)
(72) Inventor: COLLINGE, Mehdi, 7141 Hainault (BE); JOHNSON, Alan, Maldon, Essex CM9 8HW (GB)
(74) Representative: Gill Jennings & Every LLP

(57) **Abstract**

A system and method is disclosed for facilitating a mobile payment. A mobile phone 2 is provided and a front-facing camera 6 of the mobile phone 2 can image the display screen 14 of a point of sale device 10. In one arrangement one or more processors in the mobile phone 2 can convert magnetic stripe data from a payment card into a two-dimensional barcode for display on the screen 4 of the mobile phone 2. The two-dimensional barcode includes embedded information from the payment card including Application Transaction Counter (ATC) data and card verification (CVC3) data. An optical scanner 12 in the point of sale device 10 is used to read the two-dimensional barcode displayed on the mobile phone 2, and the code can be analysed to extract the embedded information. The extracted information can then be used to process a transaction.

## Description

The present invention relates to a method and computer system for enabling payment transactions using a mobile device and a point of sale device.

A number of known techniques are provided to enable payment transactions to be authorized by a mobile device, such as a mobile phone, in communication with a point of sale device. In one example, near field communication (NFC) techniques can be used to deliver a mobile payment solution. However, these techniques require the use of a mobile phone having NFC features, which may not always be available.

An object of the present invention is to provide an alternative technical arrangement that can facilitate mobile phone payments with fewer compatibility issues for the mobile phones.

According to an aspect of the present invention there is provided a method for conducting a transaction, comprising the steps of: converting identifying data relating to a transaction into a code for display on a screen of a mobile device; displaying the code on the screen of the mobile device; reading the displayed code at a point of sale device; determining the identifying data relating to the transaction, based on the code read by the point of sale device; and processing the transaction using the identifying data relating to the transaction.

In this way, a mobile device can be used to complete a transaction using its display screen. Personal data relating to the transaction can be displayed by way of a code that can be scanned by the point of sale device. Thus, any mobile device with a screen can be used to complete a transaction, which offers an improvement over technologies that require other features such as near field communication (NFC) technology.

The identifying data may be personal data, or data unique to a particular payment card or account. The identifying data may include a cryptographic checksum card, Application Transaction Counter (ATC) data and/or card verification (CVC3) data, as may be appropriate.

Preferably the code displayed on the screen of the mobile device is a second code, and the method preferably comprises displaying a first code on a screen of the point of sale device, including embedded data, reading the first code displayed on the screen of the point of sale device using a camera on the mobile device, extracting the embedded data at the mobile device and performing the steps of converting identifying data relating to a transaction into a second code and displaying the second code on the screen of the mobile device responsive to extraction of the embedded data. Thus, successful extraction of the embedded data in the first code, displayed on the screen of the point of sale device, can be used as a trigger for the mobile device to generate and display the second code.

Preferably the camera on the mobile device is front-facing. In other words, the camera of the mobile device may be on the same surface as the screen, facing in the same direction. In this way, the mobile device can engage in communication with the point of sale device as soon as it is positioned in the range of the optical scanner in the point of sale device. A communication sequence may be initiated between the mobile phone and the point of sale device, whereby a code is displayed on the screen of one device to be read by the other device, and a response code is displayed on the other device. A plurality of response codes may be communicated between the mobile device and the point of sale device in order to generate the first code and/or the second code in different embodiments.

In one arrangement the (first) code may be static. The static code may encode fixed information to be read by the mobile device. In one example, the static code may include information from which the mobile device can determine that contactless mag stripe or Dynamic Magnetic Stripe Data payments protocols are or are not supported.

In response to the static code the mobile device may be arranged to generate and display a code which encodes a proportion of the information required by the point of sale device to complete the transaction. A further code may be displayed on the mobile device which encodes the remainder of the information required by the point of sale device to complete the transaction. The further code may be displayed on the mobile device in response to a code displayed on the point of sale device with an embedded unpredictable number. Thus, a total of four codes may be displayed in a sequence of communications between the mobile device and the point of sale device.

In another arrangement the (first) code may be dynamic. The dynamic code may encode information to be read by the mobile device, which varies from transaction to transaction. In one example, the dynamic code may encode an unpredictable number, generated by the point of sale device, which is different for each transaction.

Preferably the first code and/or the second code is a two-dimensional barcode. A two dimensional barcode (otherwise referred to as a matrix barcode or Quick Response, QR, code) can be conveniently displayed on the screen of a mobile device, and is easily read by a point of sale device. Other codes may alternatively be displayed on the screen of a mobile device, as would be understood by a person skilled in the art.

Preferably the mobile device comprises algorithms which can be deployed if it is needed to reduce the amount of data carried using a code. In these circumstances the algorithms can be executed by one or more processors of the camera of the POS to reconstruct the full set of data using one or more templates defining the fields to be populated.

According to another aspect of the invention there is provided a system configured to process a transaction between the user of a mobile phone and a point of sale device, comprising: a mobile device having a screen, wherein the mobile device comprises one or more processors configured to convert identifying data relating to a transaction into a code and to display the code on the screen of a mobile device; a point of sale device comprising an optical reader configured to read the displayed code using the optical reader and one or more processors configured to determine the identifying data relating to the transaction, based on the code, and to process the transaction using the identifying data relating to the transaction.

According to yet another aspect of the invention there is provided a computer readable storage medium configured to store computer executable code that when executed by a computer configures the computer to: convert identifying data relating to a transaction into a code for display on a screen of a mobile device; display the code on the screen of the mobile device; read the displayed code at a point of sale device; determine the identifying data relating to the transaction, based on the code read by the point of sale device; and process the transaction using the identifying data relating to the transaction.

Apparatus features may be provided as method features and *vice-versa.*

The present invention will now be described, by way of example, with reference to the accompanying drawings in which:
Figure 1 is a schematic view of the components of a system in an embodiment of the invention;
Figure 2 shows a mobile phone and a point of sale terminal and a sequence of steps in an embodiment of the invention;
Figure 3 is a modified version of Figure 2;
Figure 4 shows a mobile phone and a point of sale terminal and a sequence of steps in another embodiment of the invention;
Figure 5 shows a mobile phone and a point of sale terminal and a sequence of steps in another embodiment of the invention;
Figure 6 shows a mobile phone and a point of sale terminal and a sequence of steps in another embodiment of the invention;
Figure 7 shows a mobile phone and a point of sale terminal and a sequence of steps in another embodiment of the invention;
Figure 8 shows a mobile phone and a point of sale terminal and a sequence of steps in another embodiment of the invention; and
Figure 9 shows a mobile phone and a point of sale terminal and a sequence of steps in another embodiment of the invention;

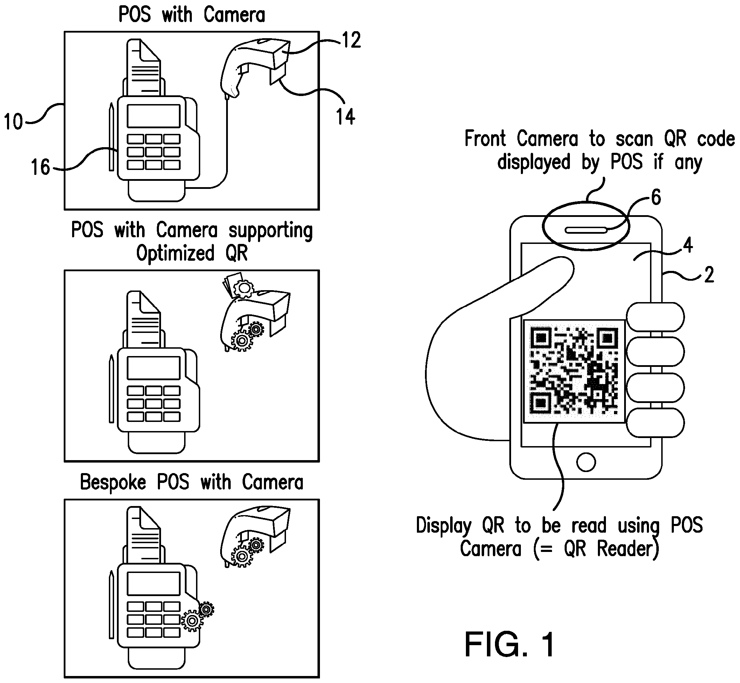

Figure 1 shows a mobile phone 2 in the hand of a user. The mobile phone 2 comprises a screen 4 and a front-facing camera 6. A point of sale device 10 is provided comprising an optical scanner 12 and a display screen 14. The optical scanner 12 is arranged to point in the same direction as the display screen 14. The optical scanner 12 is depicted as a laser scanner, but it could alternatively be embodied as a camera.

A networked terminal 16 is connected to the optical scanner 12 and the display screen 14 for processing transactions. The point of sale device 14 is depicted as a unit for use by a merchant. In alternative arrangements the point of sale device 14 may be incorporated in other units, such as vending machines.

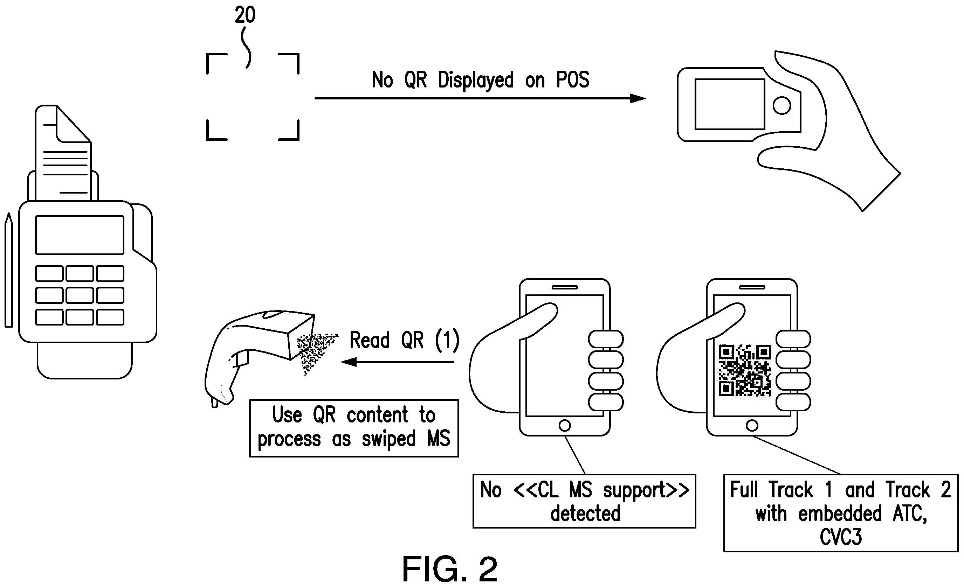

A first embodiment is now described with reference to Figure 2. In this arrangement the mobile phone 2 is brought into close proximity with the point of sale device 10 so that the front-facing camera 6 of the mobile phone 2 can image the display screen 14 of the point of sale device 10. In this arrangement the display screen 14 is initially blank. The absence of any image on the display screen 14 is detected by the mobile phone 2 using the front-facing camera 6. This may be interpreted by the mobile phone 2 to indicate that contactless magnetic stripe payments are not supported. In response one or more processors (not shown) in the mobile phone 2 convert magnetic stripe data from a payment card using, for example, Dynamic Magnetic Stripe Data protocol into a two-dimensional barcode for display on the screen 4 of the mobile phone 2. The two-dimensional barcode includes embedded information from the payment card including Application Transaction Counter (ATC) data and card verification (CVC3) data, and the two-dimensional barcode is displayed on the screen 4. The two-dimensional barcode includes an embedded unpredictable number, generated by the mobile phone 2. The optical scanner 12 in the point of sale device 10 is used to read the two-dimensional barcode displayed on the mobile phone 2, and the code can be analysed to extract the embedded information. The extracted information can then be used to process the transaction, in a conventional manner as would be understood by a person skilled in the art.

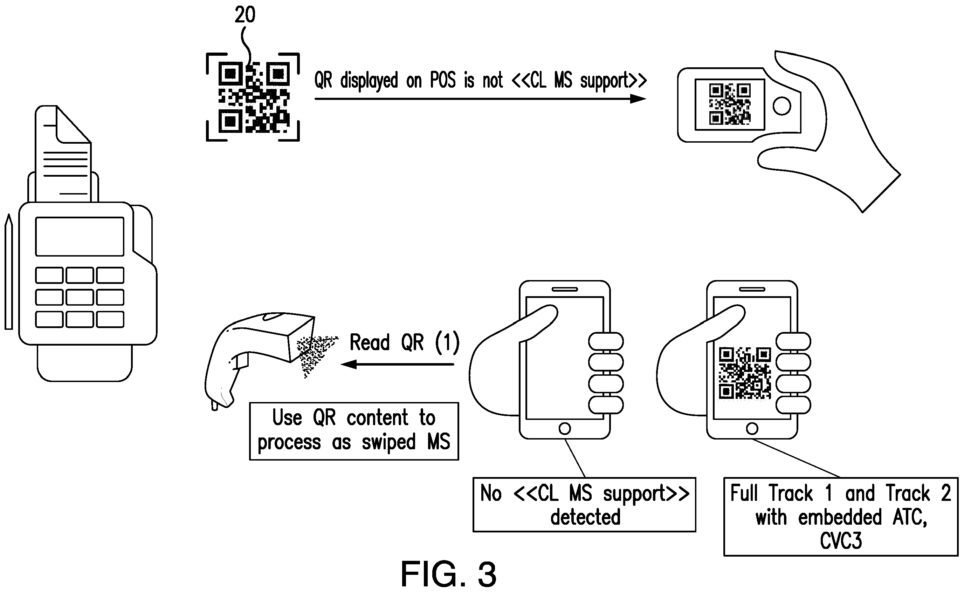

A modified version of the first embodiment is now described with reference to Figure 3. In this arrangement the mobile phone 2 is brought into close proximity with the point of sale device 10 so that the front-facing camera 6 of the mobile phone 2 can image the display screen 14. In this arrangement the display screen 14 includes a two-dimensional barcode. The two-dimensional barcode displayed on the display screen 14 is static and encodes information indicating that the point of sale device 10 does not support contactless magnetic stripe payments. In response to this the mobile phone 2 converts magnetic stripe data into a two-dimensional barcode, in the manner explained above with reference to Figure 2.

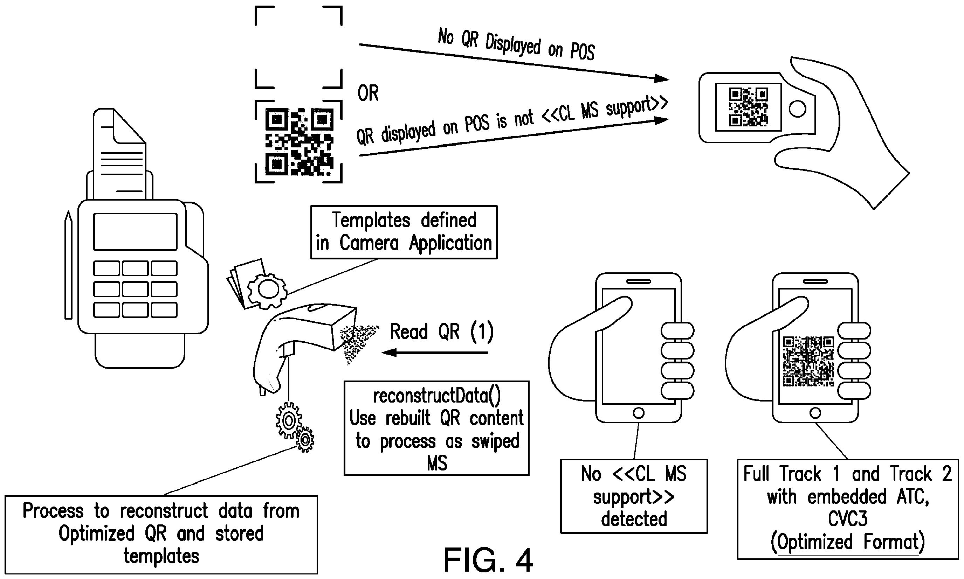

Figure 4 shows a combination of the techniques described above with reference to Figures 2 and 3. The display screen 14 of the point of sale device 10 is either initially blank, or else includes a static two-dimensional barcode including information indicating that the point of sale device 10 does not support contactless magnetic stripe payments.

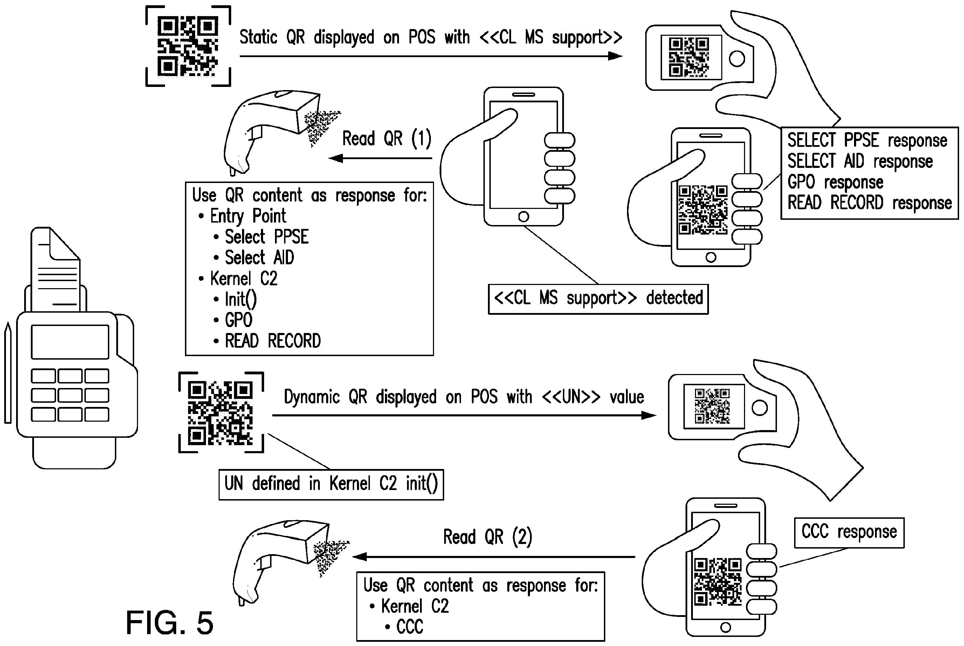

A second embodiment is now described with reference to Figure 5. Again, the front-facing camera 6 of the mobile phone 2 is made to image the display screen 14 of the point of sale device 10. In this arrangement a static two-dimensional barcode is initially displayed with embedded information indicating that contactless magnetic stripe payments are supported. In response to reading this barcode the mobile phone 2 responds by generating its own two-dimensional barcode which includes embedded information relating to an entry point and a kernel C2. The optical scanner 12 is arranged to read these data and, in response, generates a dynamic two-dimensional barcode with an embedded unpredictable number (UN). The two-dimensional barcode with the embedded unpredictable number (UN) is displayed on the display screen 14 of the point of sale device 10 and is imaged by the front-facing camera 6 of the mobile phone 2. In response to detection of the dynamic two-dimensional barcode the mobile phone 2 generates a further two-dimensional barcode for display on its display screen 4 having embedded Compute Cryptographic Checksum (CCC) data. The further two-dimensional barcode can be read by the optical scanner 12 in the point of sale device 10 and the CCC data can be extracted to complete the transaction in a manner that would be understood by a person skilled in the art.

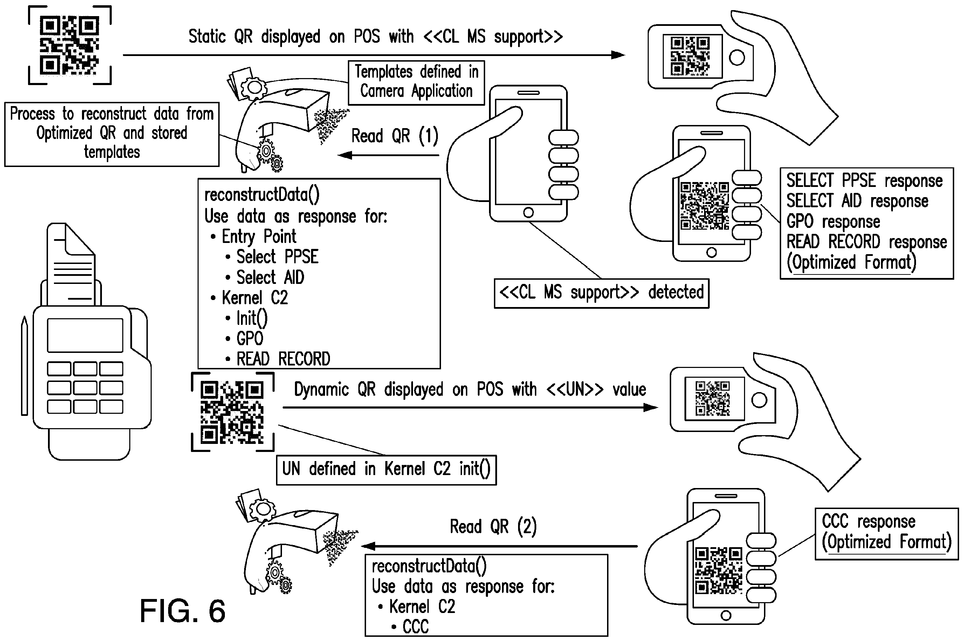

A modified version of the process described with reference to Figure 5 is depicted in Figure 6. In this arrangement the amount of data in each two-dimensional barcode is reduced.

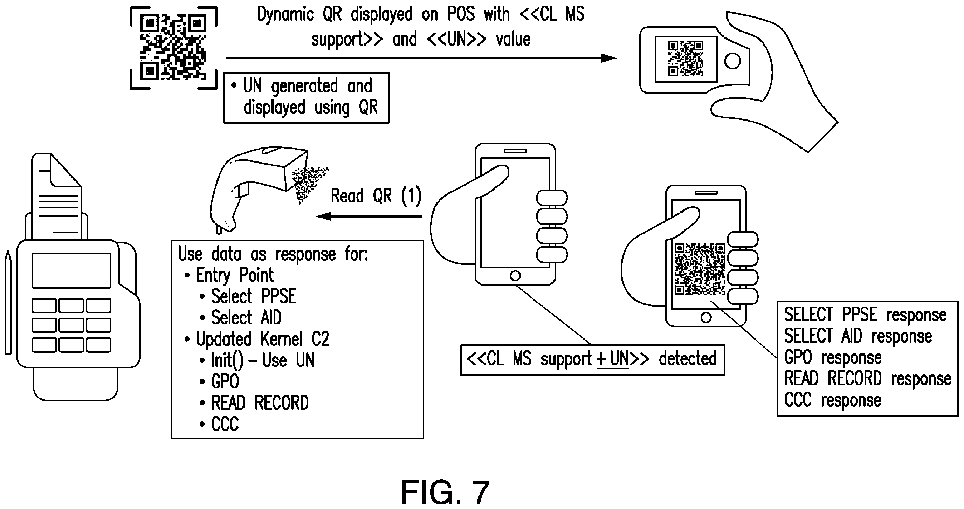

A third embodiment is now described with reference to Figure 7. In this arrangement the front-facing camera 6 of the mobile phone 2 is made to image the display screen 14 of the point of sale device 10. In this arrangement a dynamic two-dimensional barcode is initially displayed with embedded information indicating that contactless magnetic stripe payments are supported and including an unpredictable number (UN) generated at the point of sale device 10. In this arrangement the mobile phone 2 can respond with a single two-dimensional barcode. The two dimensional barcode generated by the mobile phone 2 includes a select proximity payment system environment (PPSE) response, a select application identifier (AID) response, a get processing options (GPO) response, a read record response and a compute cryptographic checksum (CCC) response. The two-dimensional barcode is read by the optical scanner 12 and the relevant data are extracted in order to process the transaction. The third embodiment may be considered advantageous, relative to the second embodiment, because only one two-dimensional barcode is generated by the mobile device 2, to be read by the optical scanner 12.

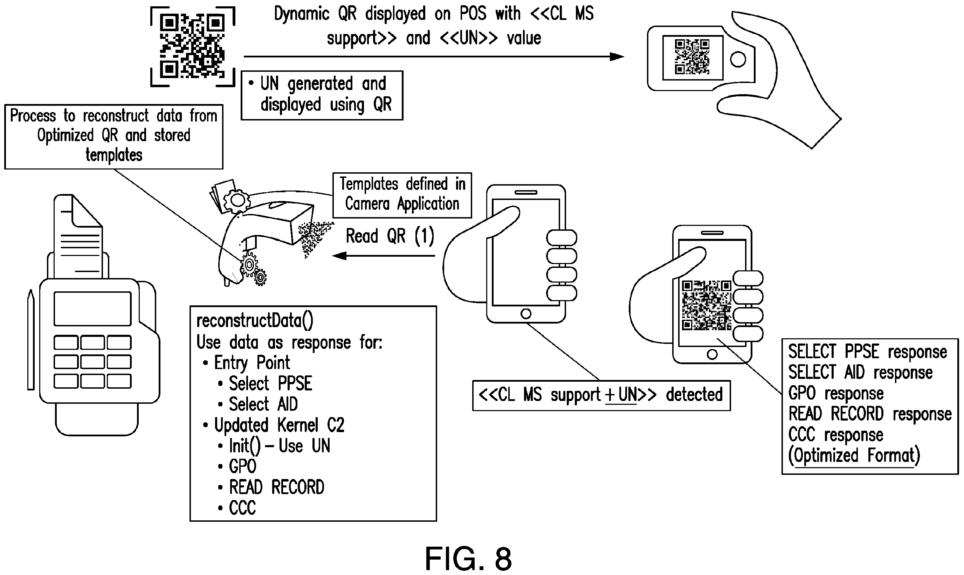

A modified version of the process described with reference to Figure 7 is depicted in Figure 8. In this arrangement the amount of data carried in each two-dimensional barcode is reduced.

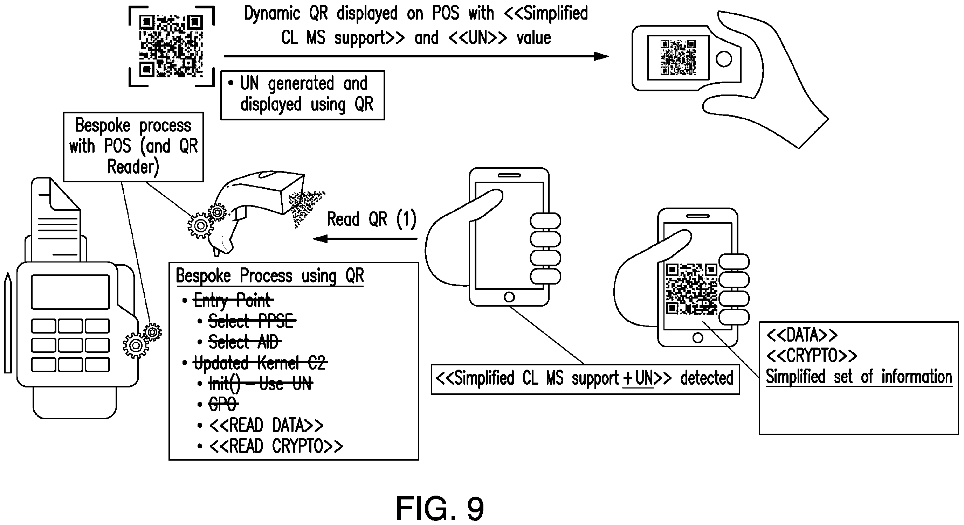

A fourth embodiment is now described with reference to Figure 9. In this arrangement a dynamic two-dimensional barcode is initially displayed with embedded information indicating that contactless magnetic stripe payments are supported and including an unpredictable number (UN). The unpredictable number (UN) is generated at the point of sale device 10 prior to processing any data captured from the mobile device 2. In this arrangement the mobile phone 2 responds by generating its own two-dimensional barcode. The two dimensional barcode generated by the mobile phone 2 includes 'READ DATA' and 'READ CRYPTO' data fields. The 'READ DATA' field is used to deliver information about the payment card used to perform the transaction while the 'READ CRYPTO' field is used to deliver transaction data including the required cryptogram(s). The two-dimensional barcode displayed on the screen 4 of the mobile phone 2 is read by the optical scanner 12 and the relevant data are extracted in order to process the transaction.

The above embodiments are described with reference to a mobile phone 2. However, it will be appreciated that a variety of other mobile devices could be used in the alternative.

The acceptance of Mobile Payment for payment in a physical store used to have a strong dependency with the availability of terminals supporting contactless transactions and devices using a Secure Element (SE).

With the introduction of software-based payment solutions such as MasterCard Cloud-Based Payments (MCBP) and Trusted Execution Environment (TEE)-based solution such as MasterCard TEE-Based Payments (MTBP) the dependency on Secure Element is less a concern as alternate solutions exist and have been successfully deployed at a global level in Issuer Wallets or integrated in digital giants wallets such as Android Pay or Samsung Pay.

Nevertheless, the number of POS supporting Contactless and the number of Mobile Devices with an NFC interface enabled are still a blocking element to the deployment of Mobile Payment solution for in-store payment.

Dynamic Magnetic MagStripe Data (DMSD) combined has been designed by MasterCard as a means to embed some dynamic time-based data in track data commonly used when a Magnetic Stripe card is swiped in a terminal.

With the availability of a proprietary solution able to support MagStripe Secured Transmission (MST) as a communication channel between a Mobile Device and the POS, it is possible to deliver a Mobile Payment solution not using NFC technology.

Nevertheless this solution is only available for high-end Mobile Devices from one Vendor used in combination of their own Wallet (Samsung Pay).

This document presents a list of solutions using QR-Based Mobile Payment for in-store payment that can be used using any Mobile Device.

A first solution only requires the Mobile Device to have a display while the second set of solutions requires the Mobile Device to have a display and a front camera next or embedded to the display.

Note that the solutions could also be used in other contexts such as vending machine but may also be extended to virtual stores.

The concept of POS is used as the generic term in this document to describe the acceptance point that can be used by the owner of the Mobile Device in order to perform a mobile payment transaction using QR code(s).

MasterCard already designed solutions using QR code for remote payment such as US20140101036 and US20160155112 and co-pending US provisional application (Attorney Docket Number: P01889-US-PROV (M01.331 P)).

### QR-Based Mobile Payment

### Overview

The solutions described in this document use different models **(****Figure 1****)** for the communication between the Mobile Device and the POS.

### Figure 1-Communication options between Mobile Device and POS

The minimum requirement for the Mobile Device is the availability of the display able to show a QR code. The POS will scan this QR code using a Camera connected to the POS.

A front camera available next to the display of the Mobile Device can be used in order to scan a QR Code displayed by the POS.

The Camera of the POS implements some logic in order to process the data provided by the Mobile Device.

The following solutions can be integrated with a standard POS:
POS with support of Mag Stripe swiped transactions -- *Solution 1*/*1Q - QR-Based DMSD Transaction (POS with QR2MS interface)*
POS with support of Contactless Mag Stripe transactions -- *Solution 2 - QR-Based CLMS Transaction (POS with QR2EP*+*KC2 interface)*

The following solutions require a bespoke POS:
Bespoke POS (using updated Kernel C2) with support of Contactless Mag Stripe transactions - *Solution 3 - QR*-*Based CLMS Transaction (Updated POS with QR2EP*+*KC2 interface)* Bespoke POS (using simplified Kernel C2 or custom process) -- *Solution 4 - QR*-*Based CLMS Transaction (Bespoke POS with OR interface)*

### Solution 1/1Q - QR-Based DMSD Transaction (POS with QR2MS interface)

The Solution 1 described in Figure 2 is basic model leveraging the concept of Dynamic Magnetic Stripe Data [DMSD].

Instead of delivering the information to the POS using MagStripe Secured Transmission (MST), a QR code is displayed by the Mobile Device and read using a camera connected to the POS.

The QR Code contains Full Track 1 and Full Track 2 data with embedded ATC and CVC3 values.

The transaction is processed as a swiped Mag Stripe transaction by the POS with a specific POS entry mode value.

The transaction is authorized using MasterCard system including MasterCard Digital Enablement Services integration of DMSD validation process.

The Solution 1 Q described in Figure 3 is a variant of the Solution 1. The POS displays a QR Code that can be scanned by the Mobile Device. The QR Code does not contain a tag used to trigger the solutions 2 (Tag "CL MS support"), 3 (Tag "CL MS support and UN value") or 4 (Tag "Simplified CL MS support and UN value").

The process can be summarized as follows:
MDES = SE (TEE) based process with delivery of Card Master Keys
Input from POS = None
Camera @ Mobile not used (1) or does not detect "CL MS support" (1/1 B)
Output to POS = QR with Track 1 Track 2 as generated according to DMSD process using time based UN generated by the Mobile Payment component of the Wallet
POS enablement = No display or display of "other QR" + Camera to scan QR and translate Mag Stripe transaction data (Camera + QR as replacement of induction)
Crypto = CVC3 generation using Card Master Key
Authorization = DMSD process without changes
**Camera @ POS used one time**

The amount of data to be carried using a QR code impacts the size and complexity of the QR code.

An optimized process described in Figure 4 can be used in order to reduce the amount of data to be delivered using Solution 1 or Solution 1 Q described above.

When using this optimized process, the camera used by the POS (QR scanner) must support some additional logic in order to manage templates to be populated with data provided using the QR code (1) captured from the Mobile Device.

### Figure 2-Solution 1 / 1Q (Optimized)

The technical details about the solutions 1, 1 Q and the optimized version are provided in the section *Solution 1*/*1Q - QR*-*Based DMSD Transaction (POS with QR2MS interface)* of the *Appendix - Technical Information.*

### Solution 2 - QR-Based CLMS Transaction (POS with QR2EP+KC2 interface)

The Solution 2 described in Figure 5 is a model leveraging the concept of Contactless Mag Stripe Transaction using QR codes (one-way communication channel) instead of an NFC (Near Field Communication interface) communication channel between the POS and the Mobile Device.

### Figure 3-Solution 2

The process can be summarized as follows:
MDES = Cloud based process with delivery of Session Keys
Camera @ Mobile used and detects "CL MS support"
Output (#1) to POS = QR with following elements
Entry Point
   ▪ SELECT (PPSE) response
   ▪ SELECT response
Kernel C2
   ▪ init()
   ▪ GET PROCESSING OPTIONS response
   ▪ READ RECORD (SFI 1 Record 1) response
POS enablement = Camera @ POS to scan QR to support Entry Point and Kernel C2 (Part 1 of 2)
Input from POS = UN (displayed on POS as a QR or barcode) := COMPUTE CRYPTOGRAPHIC CHECKSUM command
Note that the UN is generated at time of the init() of the Kernel C2 after the Entry Point (SELECT PPSE, SELECT AID) has been completed.

It does mean that it is not possible to know the UN value earlier in the process.
Output (#2) to POS = QR with following element
Kernel C2
   ▪ COMPUTE CRYPTOGRAPHIC CHECKSUM response
POS enablement = Camera @ POS to scan QR to support Kernel C2 (Part 2 of 2)
Crypto = CVC3 and Session Key is used
Authorization = MCBP process without changes
**Camera @ POS used two times**

The amount of data to be carried using a QR code impacts the size and complexity of the QR code.

An optimized process described in Figure 6 can be used in order to reduce the amount of data to be delivered using Solution 2 described above.

When using this optimized process, the camera used by the POS (QR scanner) must support some additional logic in order to manage templates to be populated with data provided using the QR codes (1)(2) captured from the Mobile Device.

### Figure 4-Solution 2 (Optimized)

The technical details about the solution 2 and the optimized version are provided in the section *Solution 2 - QR*-*Based CLMS Transaction (POS with QR2EP*+*KC2 interface)* of the *Appendix - Technical Information.*

Solution 3 - QR-Based CLMS Transaction (Updated POS with QR2EP+KC2 interface) The Solution 3 described in Figure 7 is a model leveraging the concept of Contactless Mag Stripe Transaction using QR codes (one-way communication channel) instead of an NFC (Near Field Communication interface) communication channel between the POS and the Mobile Device.

One of the major drawback of *Solution 2 - QR*-*Based CLMS Transaction (POS with QR2EP*+*KC2 interface)* is the need to scan two QR Codes from the Mobile Device of the User (One before the generation of the UN value at time of initialization of Kernel C2 and one when collecting response to COMPUTE CRYPTOGRAPHIC CHECKSUM command).

Solution 3 removes the technical constraint using an updated Kernel C2 that is able to generate and display a UN value before the Contactless Mag Stripe Transaction process is initiated.

That way the transaction data can be captured by the Camera connected to the POS using a single QR code displayed by the Mobile Device.

### Figure 5-Solution 3

The process can be summarized as follows:
MDES = Cloud based process with delivery of Session Keys

**Bespoke POS using updated Kernel C2 able to generate UN (Unpredictable Number) prior to the Entry Point and Kernel C2 process.**
Camera @ Mobile used and detects "CL MS support + UN value"
Input from POS = UN (displayed on POS as a QR or barcode)
Output (#1) to POS = QR with following elements
Entry Point
   ▪ SELECT (PPSE) response
   ▪ SELECT response
Kernel C2
   ▪ init()
   ▪ GET PROCESSING OPTIONS response
   ▪ READ RECORD (SFI 1 Record 1) response
   ▪ COMPUTE CRYPTOGRAPHIC CHECKSUM response
POS enablement = Camera @ POS to scan QR to support Entry Point and **updated Kernel C2 able to use the generated UN value as part of the init() process**
Crypto = CVC3 and Session Key is used
Authorization = MCBP process without changes
**Camera @ POS used one time**

The amount of data to be carried using a QR code impacts the size and complexity of the QR code.

When using Solution 3, the total amount of data is really significant which leads to present a large and complex QR code to the Camera of the POS.

An optimized process described in Figure 8 can be used in order to reduce the amount of data to be delivered using Solution 3 described above.

When using this optimized process, the camera used by the POS (QR scanner) must support some additional logic in order to manage templates to be populated with data provided using the QR code (1) captured from the Mobile Device.

### Figure 6-solution 3 (Optimized)

The technical details about the solution 3 and the optimized version are provided in the section *Solution 3 - QR*-*Based CLMS Transaction (Updated POS with QR2EP*+*KC2 interface)* of the *Appendix - Technical Information.*

### Solution 4 - QR-Based CLMS Transaction (Bespoke POS with QR interface)

The Solution 4 described in Figure 9 is a model emulating the concept of Contactless Mag Stripe Transaction using QR codes (one-way communication channel) instead of an NFC (Near Field Communication interface) communication channel between the POS and the Mobile Device.

When using this solution a bespoke process replaces the use of the Entry Point and the (updated) Kernel C2 as presented in *Solution 2 - QR*-*Based CLMS Transaction (POS with QR2EP*+*KC2 interface)* and *Solution 3 - QR*-*Based CLMS Transaction (Updated POS with QR2EP*+*KC2 interface).*

The bespoke process is focused on reading data about the card and its configuration ("READ DATA") and obtaining the cryptographic material ("READ CRYPTO").

### Figure 7-Solution 4

The process can be summarized as follows:
MDES = Cloud based process with delivery of Session Keys

**Bespoke POS using ad hoc process and able to generate an UN (Unpredictable Number) prior to processing data captured from the Mobile Device.**
Camera @ Mobile used and detects "Simplified CL MS support + UN value"
Input from POS = UN (displayed on POS as a QR or barcode)
Output (#1) to POS = QR with following elements
"READ DATA"
"READ CRYPTO"

**POS enablement = Camera @ POS to scan QR to scan data from the Mobile Device and use a bespoke process to deliver and authorization request (constructed using "READ DATA" and "READ CRYPTO" input) to the Acquirer.**
Crypto = CVC3 and Session Key is used
Authorization = MCBP process without changes
**Camera @ POS used one time**

When using Solution 4, the amount of data delivered by the Mobile Device using a QR code is by default optimized.

The technical details about the solution 4 are provided in the section *Solution 4 - QR-Based CLMS Transaction (Bespoke POS with QR interface)* of the *Appendix - Technical Information.*

### Appendix - Technical Information

This appendix provides the technical information for the following solutions:
- *Solution 1*/*1Q* - *QR-Based DMSD Transaction (POS with QR2MS interface)*
- *Solution 2 - QR*-*Based CLMS Transaction (POS with QR2EP*+*KC2 interface)*
- *Solution 3 - QR*-*Based CLMS Transaction (Updated POS with QR2EP*+*KC2 interface)*
- *Solution 4 - QR*-*Based CLMS Transaction (Bespoke POS with QR interface)*

### Solution 1/1Q - QR-Based DMSD Transaction (POS with QR2MS interface)

### Transaction Data using Solution 1/1Q

### Note - DMSD Sample data provided by MasterCard Test Team

Track 1:
   B5204242000004011^/^1809101000000000000095813962920
Track 2:
   5204242000004011=18091010095188962920

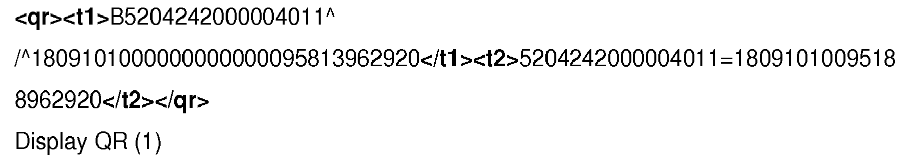

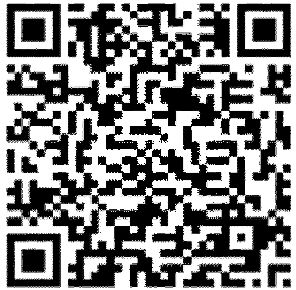

### Transaction Data using Optimized Solution 1 / 1Q

Track 1:
   B5204242000004011^/^1809101000000000000095813962920
Track 2:
   5204242000004011=18091010095188962920

The mobile device has to deliver the following values as part of the optimized data for a DMSD transaction:
<PAN>
<EXP>
<ATC>
<CVC3T1 >
<CVC3T2>
<UN>

The tag #D# is used to identify the DMSD transaction

Template to be used by the Camera optimizer component:
Track 1:
   B<PAN>^ /^<EXP>101000000000000<ATC><CVC3T1><UN>0
Track 2:
   <PAN>=<EXP>1010<ATC><CVC3T2><UN>0

Input from Mobile for DMSD transaction:
Example := #D#5204242000004011|1809|095|813|188|96292

```
 QR Displayed by Mobile Device using Solution 1 / 1Q
 Data QR (1)
 #D#5204242000004011|1809|095|813|188|96292
 Display QR (1)
```

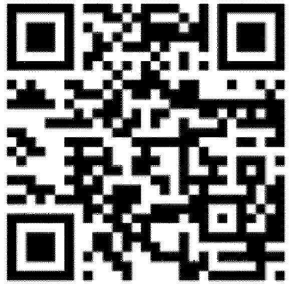

### Solution 2 - QR-Based CLMS Transaction (POS with QR2EP+KC2 interface)

### Transaction Data using Solution 2

```
 Select PPSE
 ---> Command :
 CLA INS P1 P2 LC LE
 00 A4 04 00 0E 00
 32 50 41 59 2E 53 59 53 2E 44 44 46 30 31 2PAY.SYS.DDF01
 <--- Response: (SW1-SW2) 9000 (Length) 3B
 6F 39 84 0E 32 50 41 59 2E 53 59 53 2E 44 44 46 o9..2PAY.SYS.DDF
 30 31 A5 27 BF 0C 24 61 10 4F 07 A0 00 00 00 04 01 .'..$a.O......
 10108701 01 9F2A01 0261 10 4F 07 A0 00 00 ......*..a.O....
 00 04 22 03 87 01 02 9F 2A 01 02 ..".....*..
 Select AID
 ---> Command :
 CLA INS P1 P2 LC LE
 00 A4 04 00 07 00
 A0 00 00 00 04 10 10 .......
 <--- Response: (SW1-SW2) 9000 (Length) 2F
 6F 2D 84 07 A0 00 00 00 04 10 10 A5 22 50 0A 4D o-.........."P.M
 61 73 74 65 72 43 61 72 64 87 01 01 9F 38 03 9F asterCard....8..
 35 01 BF 0C 0A 9F 6E 07 03 80 00 00 31 34 00 5.....n.....14.
 GPO
 ---> Command :
 CLA INS P1 P2 LC LE
 80 A8 00 00 03 00
 83 01 00 ...
 <--- Response: (SW1-SW2) 9000 (Length) 10
 77 0E 82 02 1B 80 94 08 08 01 01 00 10 01 03 01 w...............
 READ RECORD
 ---> Command :
 CLA INS P1 P2 LC LE
 00 B2 01 0C 00 00
 <--- Response: (SW1-SW2) 9000 (Length) 89
 70 81 86 9F 6C 02 00 01 9F 62 06 00 00 00 00 00 p...l....b......
 F0 9F 63 06 00 00 00 00 0F 0E 56 29 42 35 32 38 ..c.......V)B528
 32 36 35 36 38 39 32 33 34 38 34 38 30 5E 20 2F 2656892348480^ /
 5E 31 37 30 32 32 32 36 30 30 30 30 30 30 30 30 ^170222600000000
 30 30 30 30 30 9F 64 01 04 9F 65 02 00 F0 9F 66 00000.d...e....f
 02 0F 0E 9F 6B 13 52 82 65 68 92 34 84 80 D1 70 ....k.R.eh.4...p
 22 26 00 00 00 00 00 00 0F 9F 67 01 04 9F 69 19 "&........g...i.
 9F 6A 04 9F 7E 01 9F 02 06 5F 2A 02 9F 1 A 02 9C .j..∼...._*....
 019A039F15029F3501 .......5.
 CCC
 ---> Command :
 CLA INS P1 P2 LC LE
 80 2A 8E 80 16 00
 00 00 05 28 01 00 00 00 00 00 02 09 78 00 56 00 ...(........x.V.
 16 07 05 00 00 00 ......
 <--- Response: (SW1-SW2) 9000 (Length) 17
 77 15 9F 61 02 1 B 75 9F 60 02 1 B 75 9F 36 02 02 w..a..u.'..u.6..
 DA DF 4B 03 00 10 00 ..K....
 QR Codes Displayed by Mobile Device using Solution 2
 Data QR (1)
 <qr><ppse>6F39840E325041592E5359532E4444463031A527BF0C2461104F07A000
 00000410108701019F2A010261104F07A00000000422038701029F2A0102</ppse><ai
 d>6F2D8407A0000000041010A522500A4D6173746572436172648701019F38039F35
 01BF0C0A9F6E0703800000313400</aid><gpo>770E82021B80940808010100100103
 01</gpo><read>7081869F6C0200019F62060000000000F09F6306000000000F0E562
 942353238323635363839323334383438305E202F5E313730323232363030303030303
 03030303030309F6401049F650200F09F66020F0E9F6B135282656892348480D17022
 260000000000000F9F6701049F69199F6A049F7E019F02065F2A029F1A029C019A03
 9F15029F3501 </read></qr>
 Display QR (1)
```

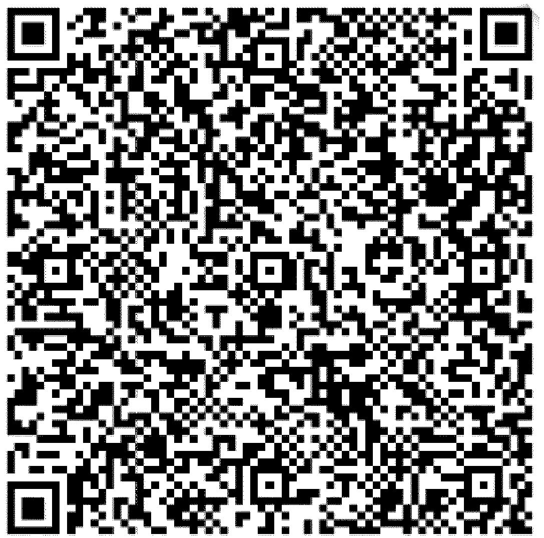

```
 Data QR (2)
 <qr><ccc>77159F61021B759F60021B759F360202DADF4B03001000</ccc>/<qr>
 Display QR (2)
```

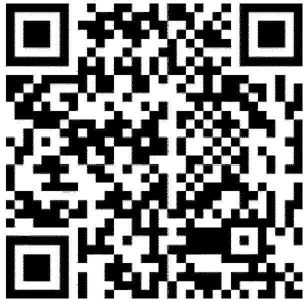

```
 Transaction Data using Optimized Solution 2
 Select PPSE
 ---> Command :
 CLA INS P1 P2 LC LE
 00 A4 04 00 0E 00
 32 50 41 59 2E 53 59 53 2E 44 44 46 30 31 2PAY.SYS.DDF01
 <--- Response: (SW1-SW2) 9000 (Length) 3B
 6F 39 84 0E 32 50 41 59 2E 53 59 53 2E 44 44 46 o9..2PAY.SYS.DDF
 30 31 A5 27 BF 0C 24 61 10 4F 07 A0 00 00 00 04 01 .'..$a.O......
 10108701 01 9F2A01 0261 10 4F 07 A0 00 00 ......*..a.O....
 00 04 22 03 87 01 02 9F 2A 01 02 ..".....*..
 Tag : 6F [File Control Information Template]
 Length: 39
 | Tag : 84 [DF Name]
 | Length: 0E
 | Data : 325041592E5359532E4444463031
 | Tag : A5 [File Control Information Proprietary Template]
 | Length: 27
 | | Tag : BF0C [File Control Information Issuer Discretionary Data]
 | | Length: 24
 | | | Tag : 61 [Application Template]
 | | | Length: 10
 | | | | Tag : 4F [Application Dedicated File (ADF) Name]
 | | | | Length: 07
 | | | | Data : A0000000041010
 | | | | Tag : 87 [Application Priority Indicator]
 | | | | Length: 01
 | | | | Data : 01
 | | | | Tag : 9F2A [Unknown Tag]
 | | | | Length: 01
 | | | | Data : 02
 | | | Tag : 61 [Application Template]
 | | | Length: 10
 | | | | Tag : 4F [Application Dedicated File (ADF) Name]
 | | | | Length: 07
 | | | | Data : A0000000042203
 | | | | Tag : 87 [Application Priority Indicator]
 | | | | Length: 01
 | | | | Data : 02
 | | | | Tag : 9F2A [Unknown Tag]
 | | | | Length: 01
 | | | | Data : 02
```

The mobile device has to deliver a list of <AID> as part of the optimized data for **SELECT PPSE** response

The tag #P# is used to identify the **SELECT PPSE** command The priority will be automatically computed by the Camera optimizer component using a counter value ({CTR})

The lengths (LL) are computed by the Camera optimizer component.

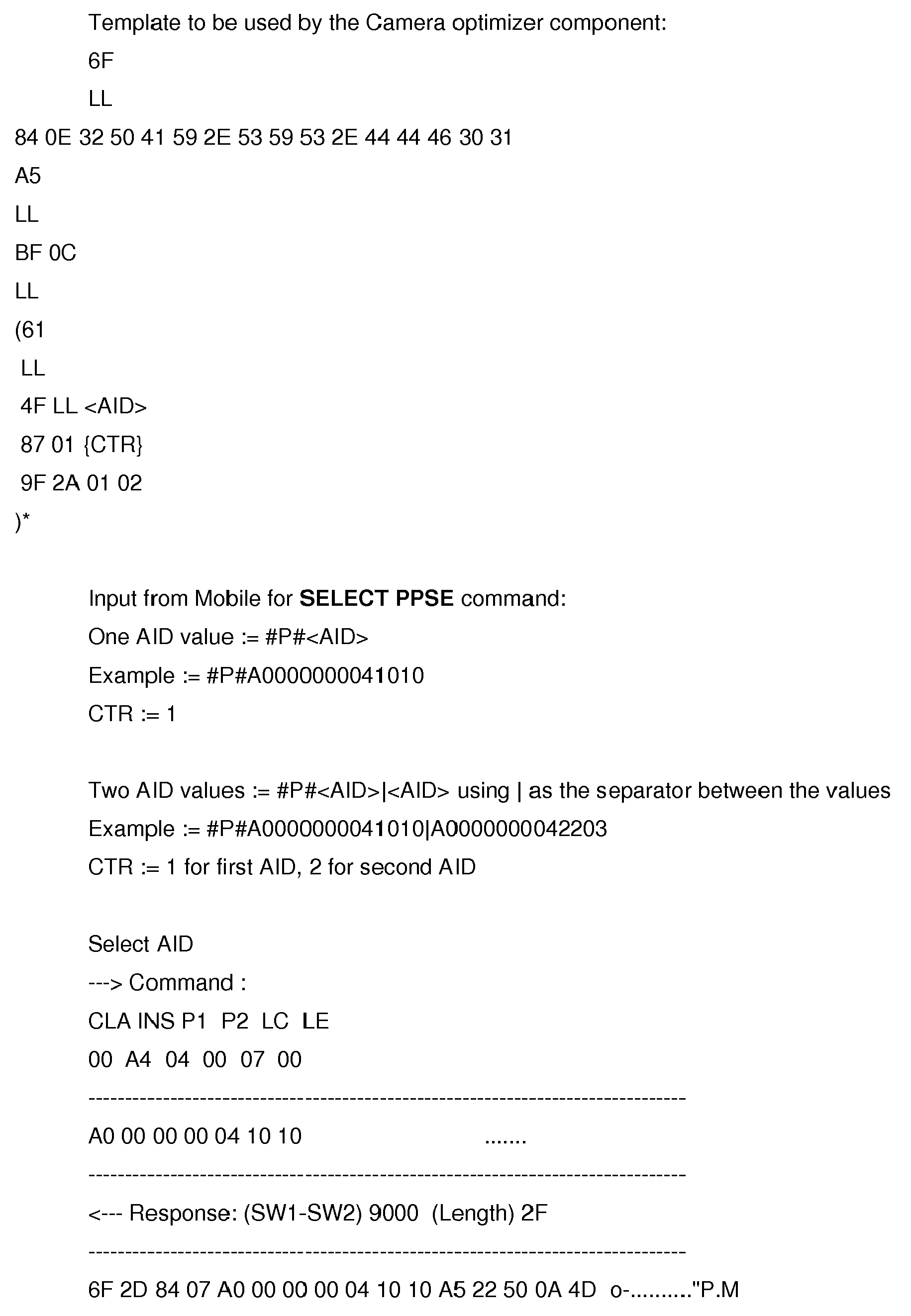

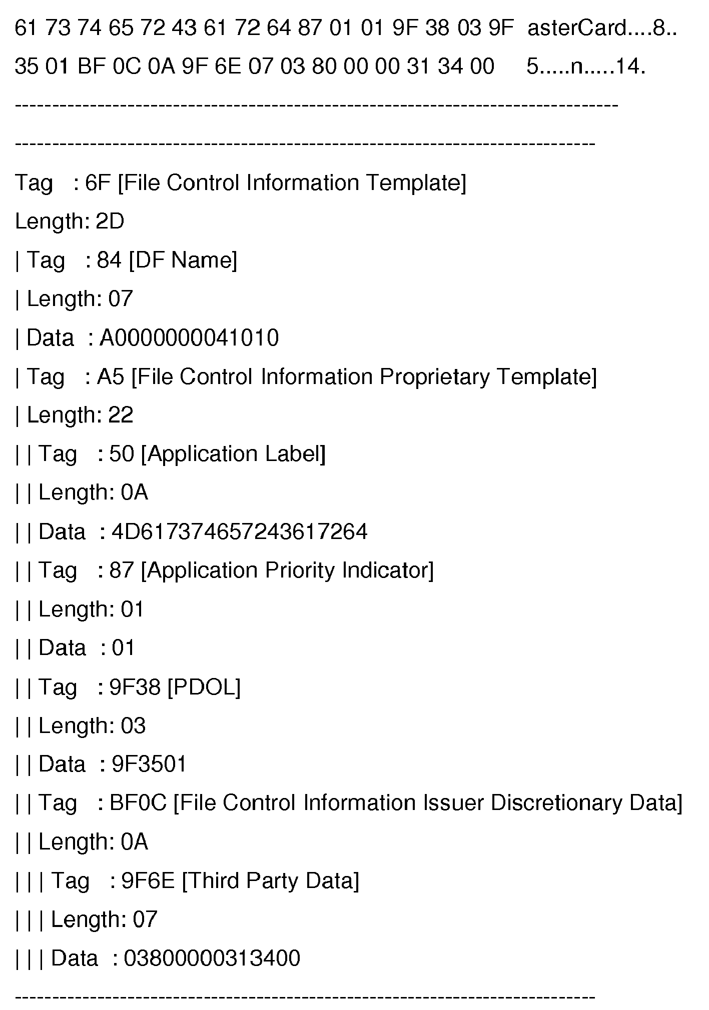

The mobile device has to deliver the following values as part of the optimized data for **SELECT AID** response:
<DFNAME>
<LABEL>
<3RDPD>

The tag #A# is used to identify the **SELECT AID** command
The lengths (LL) are computed by the Camera optimizer component.

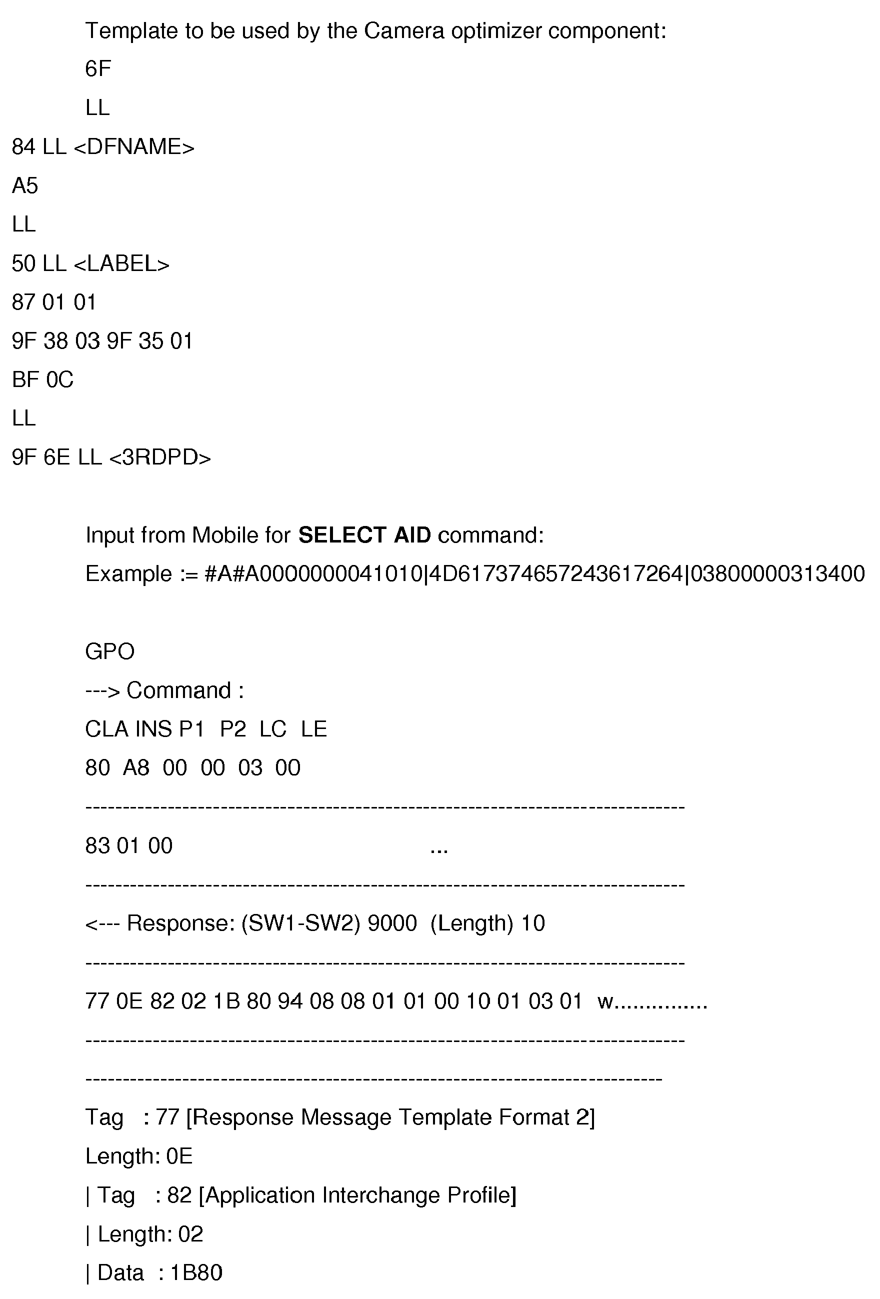

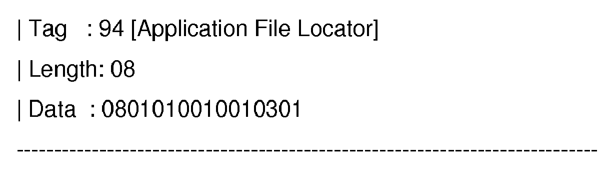

The mobile device has to deliver the <AIP> as part of the optimized data for **GPO** response.

The tag #G# is used to identify the **GPO** command
Template to be used by the Camera optimizer component:

```
 77 0E 82 02 <AIP> 94 08 08 01 01 00 10 01 03 01
```

Input from Mobile for **GPO** command:

```
Example := #G#1 B80
 READ RECORD
 ---> Command :
 CLA INS P1 P2 LC LE
 00 B2 01 0C 00 00
 <--- Response: (SW1-SW2) 9000 (Length) 89
 70 81 86 9F 6C 02 00 01 9F 62 06 00 00 00 00 00 p...l....b......
 F0 9F 63 06 00 00 00 00 0F 0E 56 29 42 35 32 38 ..c.......V)B528
 32 36 35 36 38 39 32 33 34 38 34 38 30 5E 20 2F 2656892348480^ /
 5E 31 37 30 32 32 32 36 30 30 30 30 30 30 30 30 ^170222600000000
 30 30 30 30 30 9F 64 01 04 9F 65 02 00 F0 9F 66 00000.d...e....f
 02 0F 0E 9F 6B 13 52 82 65 68 92 34 84 80 D1 70 ....k.R.eh.4...p
 22 26 00 00 00 00 00 00 0F 9F 67 01 04 9F 69 19 "&........g...i. i.
 9F 6A 04 9F 7E 01 9F 02 06 5F 2A 02 9F 1A 02 9C .j..∼...._*....
 019A039F15029F3501 .......5.
 Tag : 70 [Application Elementary File (AEF) Template]
 Length: 8186
 | Tag : 9F6C [Mag-stripe Application Version Number (Card)]
 | Length: 02
 | Data : 0001
 | Tag : 9F62 [PCVC3(Track1)]
 | Length: 06
 | Data : :0000000000F0
 | Tag : 9F63 [PUNATC(Track1)]
 | Length: 06
 | Data : 000000000F0E
 | Tag : 56 [Track 1 Data]
 | Length: 29
 | Data :
 42353238323635363839323334383438305E202F5E3137303232323630303030
 | 303030303030303030
 | ASCII: B5282656892348480^/^17022260000000000000
 | Tag : 9F64 [NATC(Track1)]
 | Length: 01
 | Data : 04
 | Tag : 9F65 [PCVC3(Track2)]
 | Length: 02
 | Data : 00F0
 | Tag : 9F66 [PUNATC(Track2)]
 | Length: 02
 | Data : 0F0E
 | Tag : 9F6B [Track 2 Data]
 | Length: 13
 | Data : :5282656892348480D17022260000000000000F
 | Tag : 9F67 [NATC(Track2)]
 | Length: 01
 | Data : 04
 | Tag : 9F69 [UDOL]
 | Length: 19
 | Data : :9F6A049F7E019F02065F2A029F1A029C019A039F15029F3501
```

The mobile device has to deliver the following values as part of the optimized data for **READ RECORD** response:
<PAN>
<EXP>

The tag #R# is used to identify the **READ RECORD** command

The ASCII value of the {PAN} and {EXP} will be automatically computed by the Camera optimizer component

The lengths (LL) are computed by the Camera optimizer component.

Template to be used by the Camera optimizer component:

```
 70
 LL
 9F 6C 02 00 01
 9F 62 06 00 00 00 00 00 F0
 9F 63 06 00 00 00 00 0F 0E
 56 LL 42 {PAN} 5E 20 2F 5E {EXP} 32 32 36 30 30 30 30 30 30 30 30 30 30 30 30 30
 9F 64 01 04
 9F 65 02 00 F0
 9F 66 02 0F 0E
 9F 6B LL <PAN> D<EXP>2 26 00 00 00 00 00 00 0F
 9F 67 01 04
 9F 69 19 9F 6A 04 9F 7E 01 9F 02 06 5F 2A 02 9F 1A 02 9C 01 9A 03 9F 15 02 9F 35 01
```

Input from Mobile for **READ RECORD** command:

```
Example := #R#5282656892348480|1702
 CCC
 ---> Command :
 CLA INS P1 P2 LC LE
 80 2A 8E 80 16 00
 00 00 05 28 01 00 00 00 00 00 02 09 78 00 56 00 ...(........x.V.
 16 07 05 00 00 00 ......
 <--- Response: (SW1-SW2) 9000 (Length) 17
 77 15 9F 61 02 1 B 75 9F 60 02 1 B 75 9F 36 02 02 w..a..u.'..u.6..
 DA DF 4B 03 00 10 00 ..K....
 Tag : 77 [Response Message Template Format 2]
 Length: 15
 | Tag : 9F61 [CVC3 (Track2)]
 | Length: 02
 | Data : 1 B75
 | Tag : 9F60 [CVC3 (Track1)]
 | Length: 02
 | Data : 1 B75
 | Tag : 9F36 [Application Transaction Counter]
 | Length: 02
 | Data : 02DA
 | Tag : DF4B [POS Cardholder Interaction Information]
 | Length: 03
 | Data : 001000
```

The mobile device has to deliver the following values as part of the optimized data for **CCC** response:
<CVC3>
<ATC>
<POSCII>

The tag #C# is used to identify the **CCC** command.

When using MasterCard Cloud-Based Payments, the same value is used for CVC3 Track 2 and CVC3 Track 1.

Template to be used by the Camera optimizer component:

```
 77
 15
 9F 61 02 <CVC3>
 9F 60 02 <CVC3>
 9F 36 02 <ATC>
 DF 4B 03 <POSCII>
```

Input from Mobile for **CCC** command:

```
 Example := #C#1 B75|02DA|001000
 QR Codes Displayed by Mobile Device using Optimized Solution 2
 Data QR (1)
 #P#A0000000041010|A0000000042203#A#A0000000041010|4D617374657243617264
 |03800000313400#G#1B80#R#5282656892348480|1702
 Display QR (1)
```

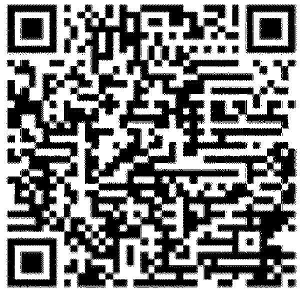

```
 Data QR (2)
 #C#1B75|02DA|001000
 Display QR (2)
```

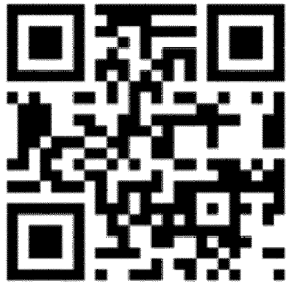

### AID Management

### Multiple AIDs

In the example provided in solution 2, the response to the **SELECT PPSE** command contains two AID values.

It does mean that when performing a standard Contactless Mag Stripe transaction, the POS based on its configuration (and User selection if any) can decide to select the first AID or the alternate AID as part of the **SELECT AID** command.

A first method to address this using Solution 2 is to restrict the list of AIDs to one element. In that case the payment application can only support one AID.

A second method to address would be to deliver the information required for both AIDs and let the POS and/or Camera (optimizer) component handle the selection of the AID and associated information such as:
Label (<LABEL>)
Third Party Data (<3RDPD>)
Application Interchange Profile (<AIP>)

### Additional AID Optimization

When using one single AID value, the content of field <AID> provided as part of response to **SELECT PPSE** command and the content of field <DFNAME> provided as part of response to **SELECT AID** command have the same value.

It is possible to provide only one value and let the Camera optimizer component use value <AID> for field <DFNAME> when handling response to **SELECT AID** command.

### Solution 3 - QR-Based CLMS Transaction (Updated POS with QR2EP+KC2 interface) Transaction Data using Solution 3

The transaction data using Solution 3 is the same as *Transaction Data using Solution 2.*

```
 QR Code Displayed by Mobile Device using Solution 3
 Data QR (1)
 <qr><ppse>6F39840E325041592E5359532E4444463031A527BF0C2461104F07A000
 00000410108701019F2A010261104F07A00000000422038701029F2A0102</ppse><ai
 d>6F2D8407A0000000041010A522500A4D6173746572436172648701019F38039F35
 01BF0C0A9F6E0703800000313400</aid><gpo>770E82021B80940808010100100103
 01</gpo><read>7081869F6C0200019F62060000000000F09F6306000000000F0E562
 942353238323635363839323334383438305E202F5E313730323232363030303030303
 03030303030309F6401049F650200F09F66020F0E9F6B135282656892348480D17022
 260000000000000F9F6701049F69199F6A049F7E019F02065F2A029F1A029C019A03
 9F15029F3501</read><ccc>77159F61021B759F60021 B759F360202DADF4B0300100
 0</ccc></qr>
 Display QR (1)
```

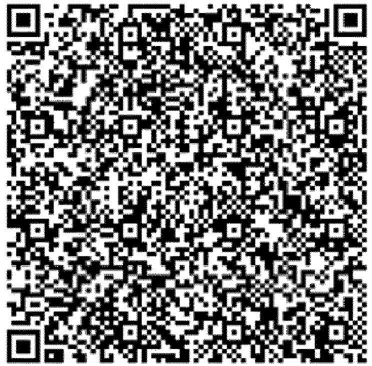

### Transaction Data using Optimized Solution 3

The transaction data using Optimized Solution 3 is the same as *Transaction Data using Optimized Solution 2.*

```
 QR Code Displayed by Mobile Device using Optimized Solution 3
 Data QR (1)
 #P#A0000000041010|A0000000042203#A#A0000000041010|4D617374657243617264
 |03800000313400#G#1B80#R#5282656892348480|1702#C#1B75|02DA|001000
 Display QR (1)
```

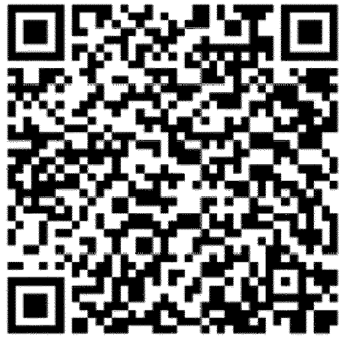

### AID Management

### Multiple AIDs

The remark about *Multiple AIDs* provided as part of Solution 2 is also applicable in the context of Solution 3.

### Additional AID Optimization

The remark about *Additional AID Optimization* provided as part of Solution 2 is also applicable in the context of Solution 3.

### Solution 4 - QR-Based CLMS Transaction (Bespoke POS with QR interface)

The solution 4 can be seen as an optimization of Solution 3 where the bespoke POS only aims to collect the minimum set of data in order to send an authorization message to the acquirer in order to process a Contactless Mag Stripe transaction.

The first part of the data "READ DATA" is used to let the mobile payment application deliver the information about the card.
The second part of the data "READ CRYPTO" is used to collect the cryptogram information generated by the mobile payment application for the transaction.

The bespoke POS combines this input in order to generate the authorization message.

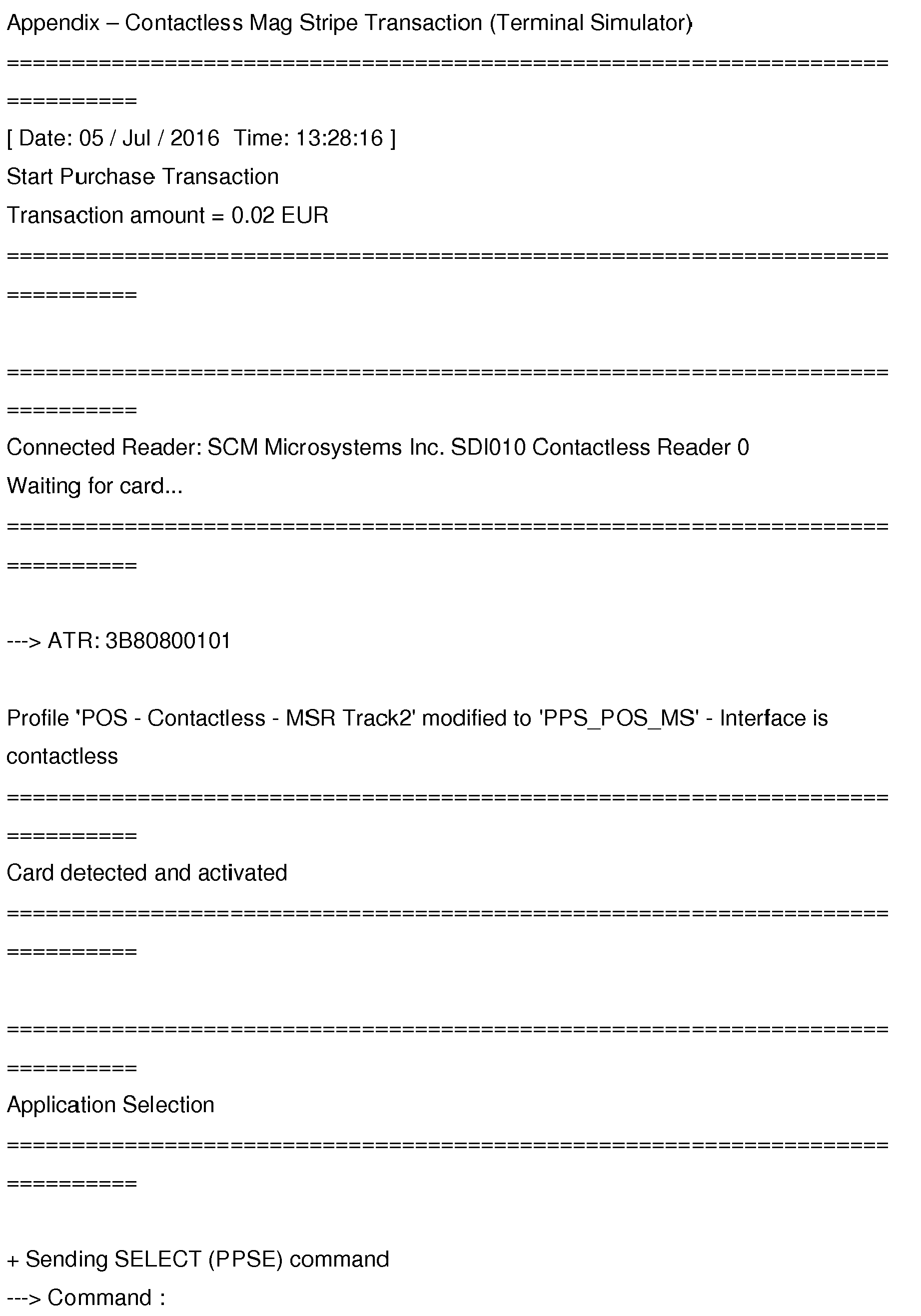

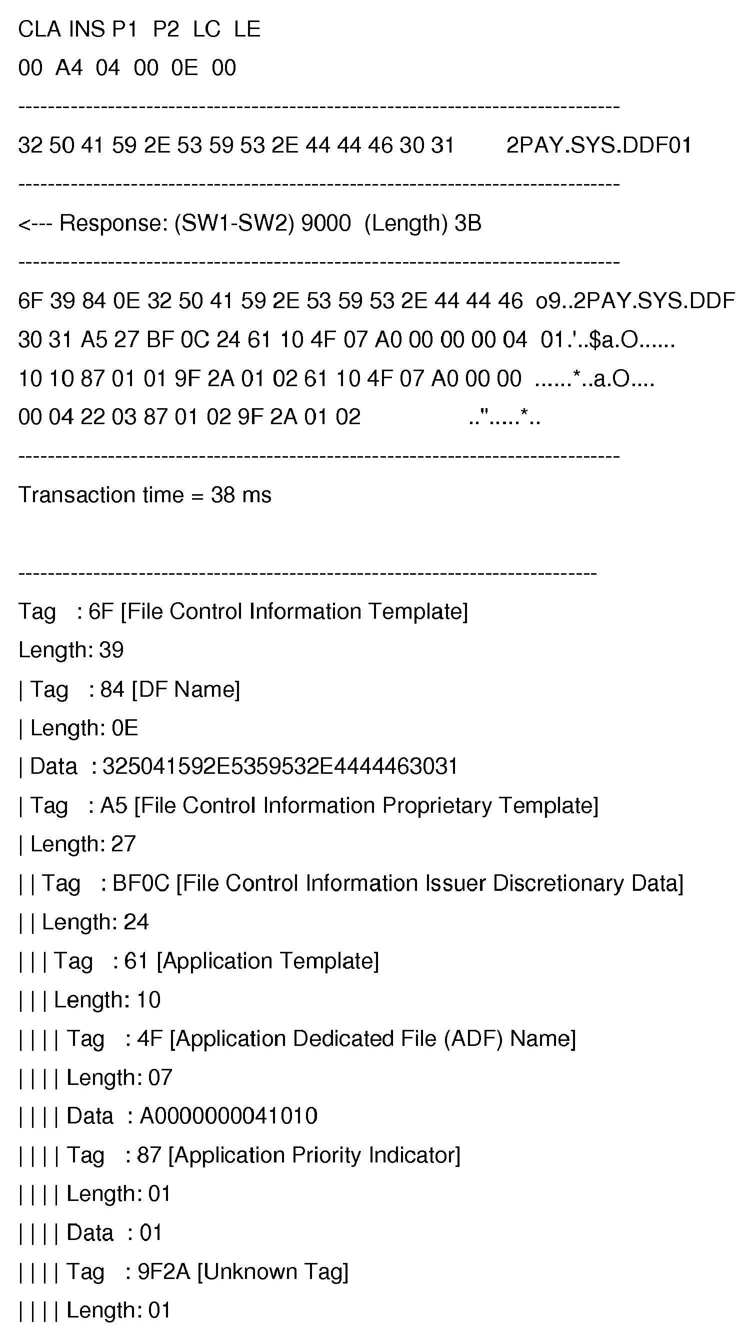

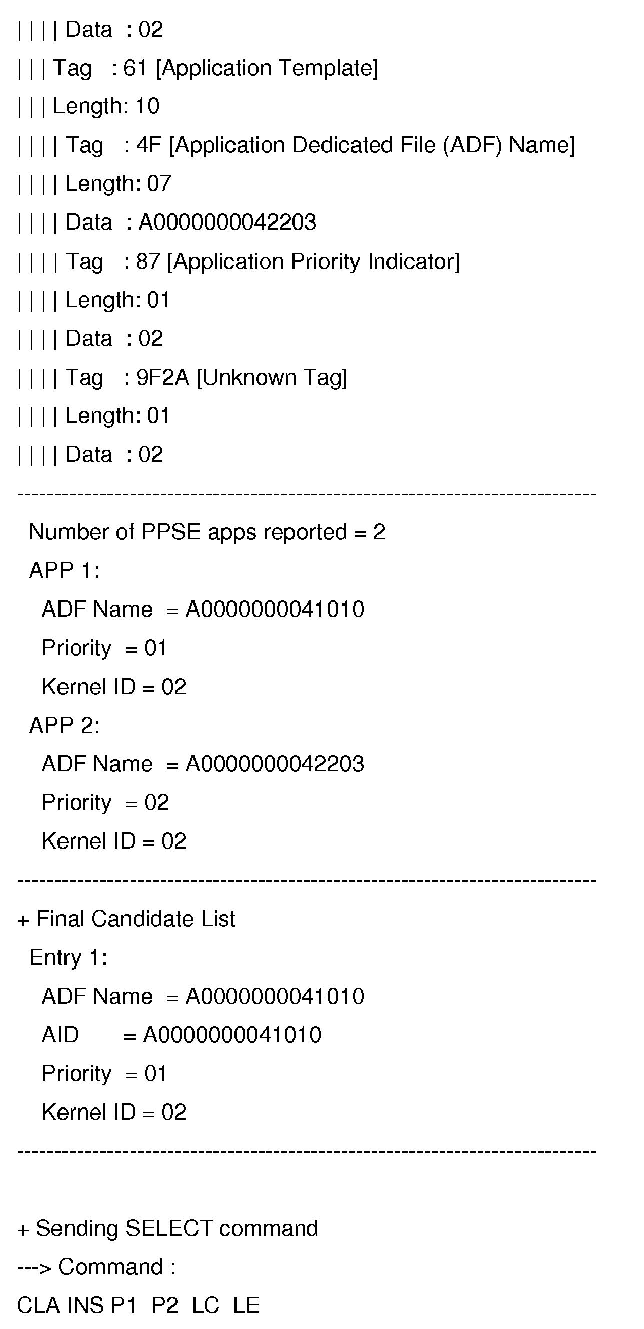

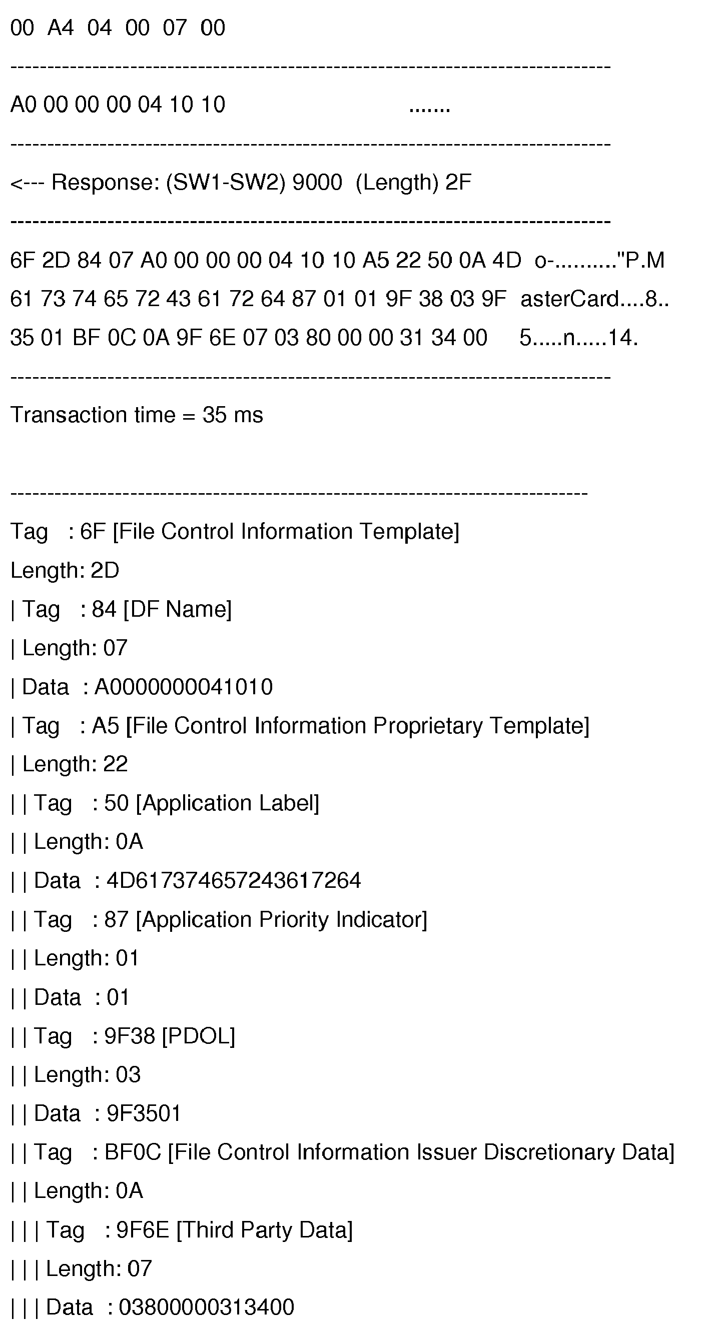

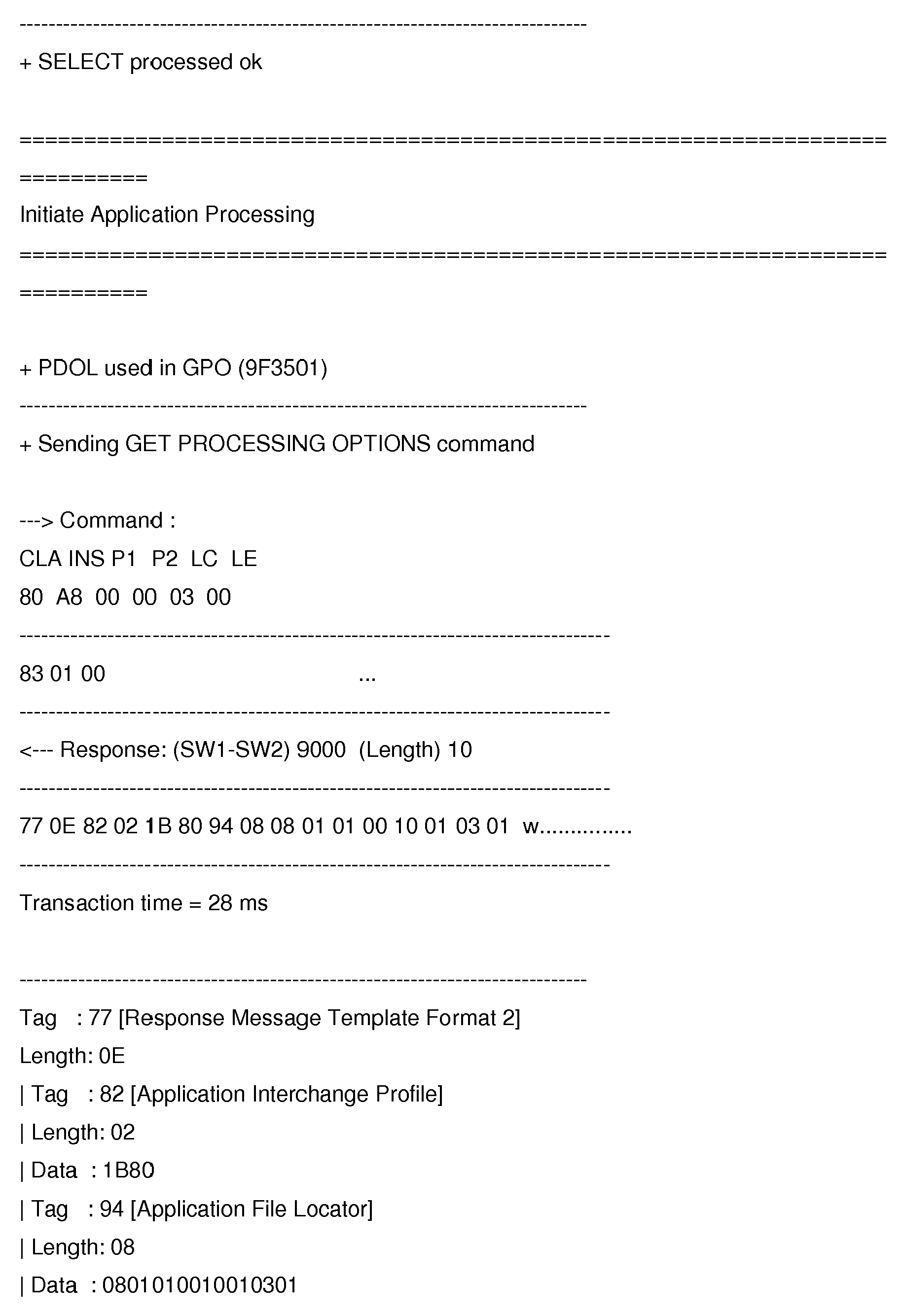

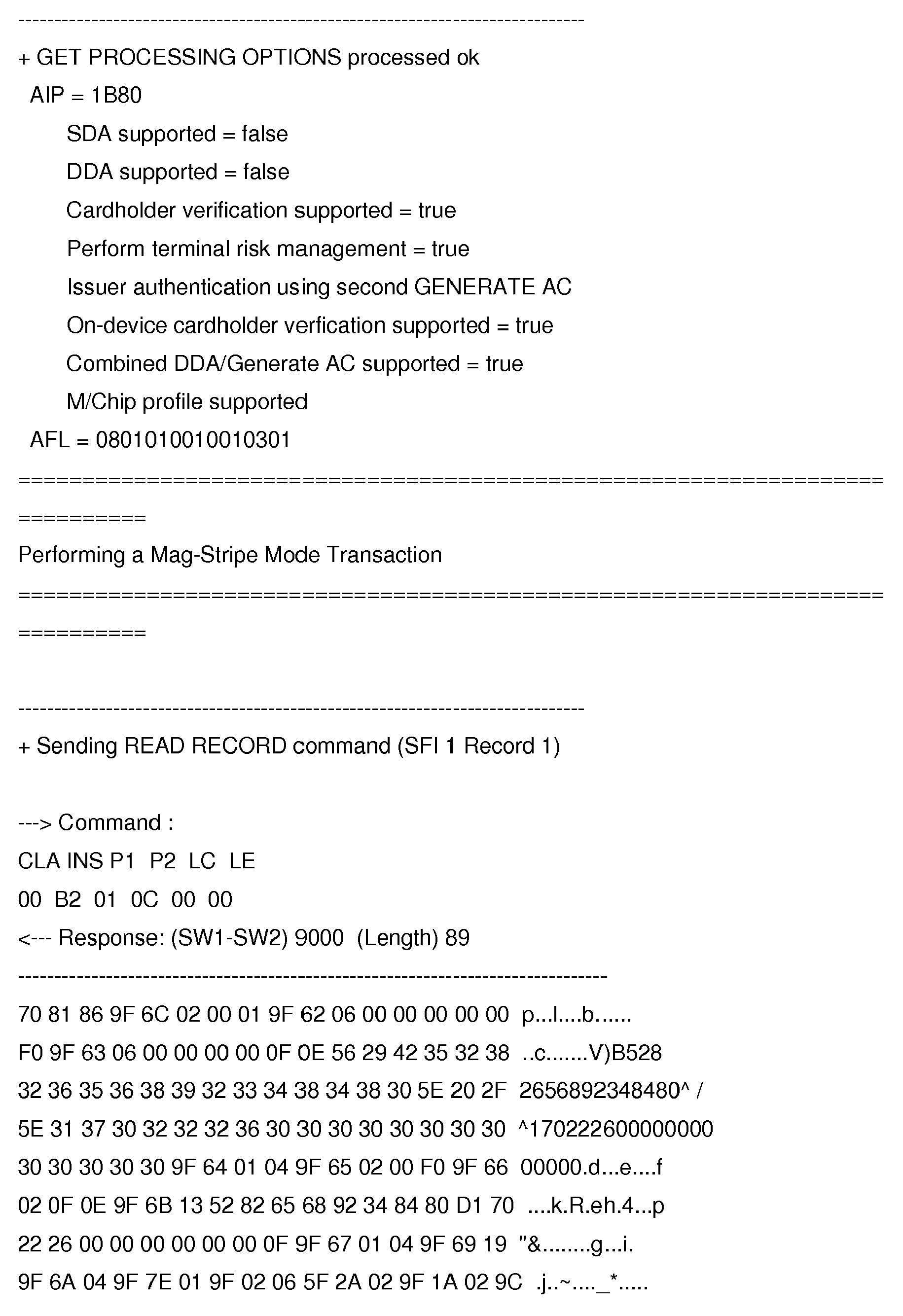

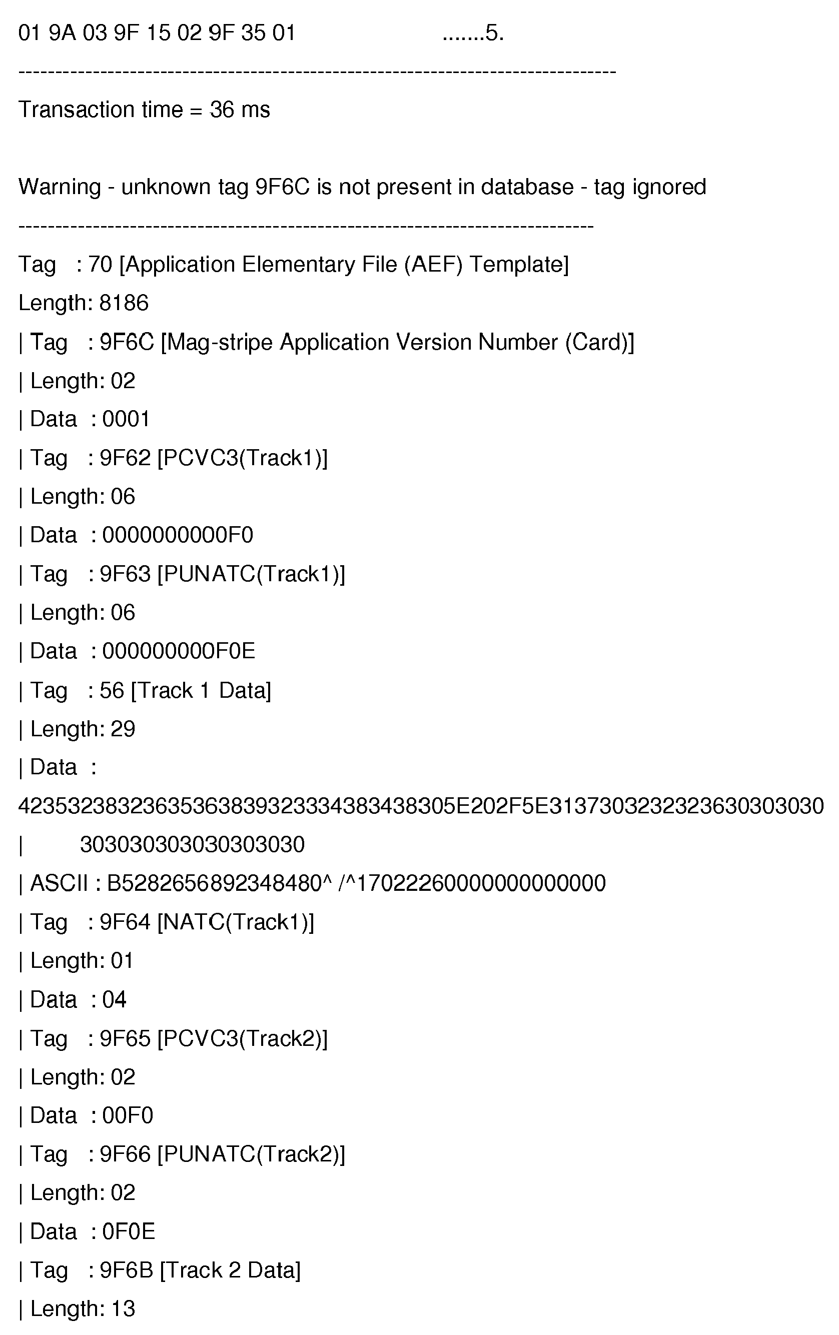

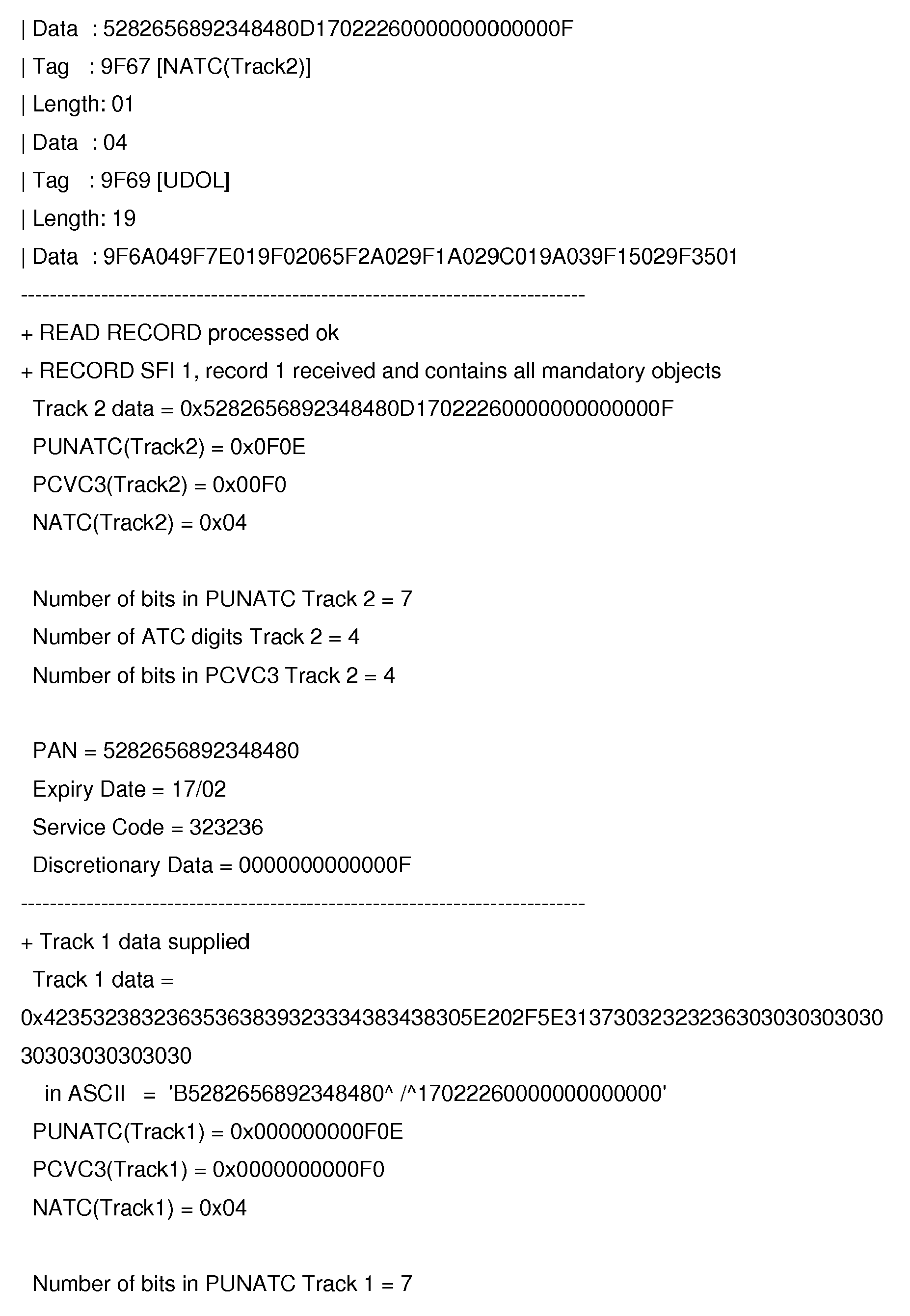

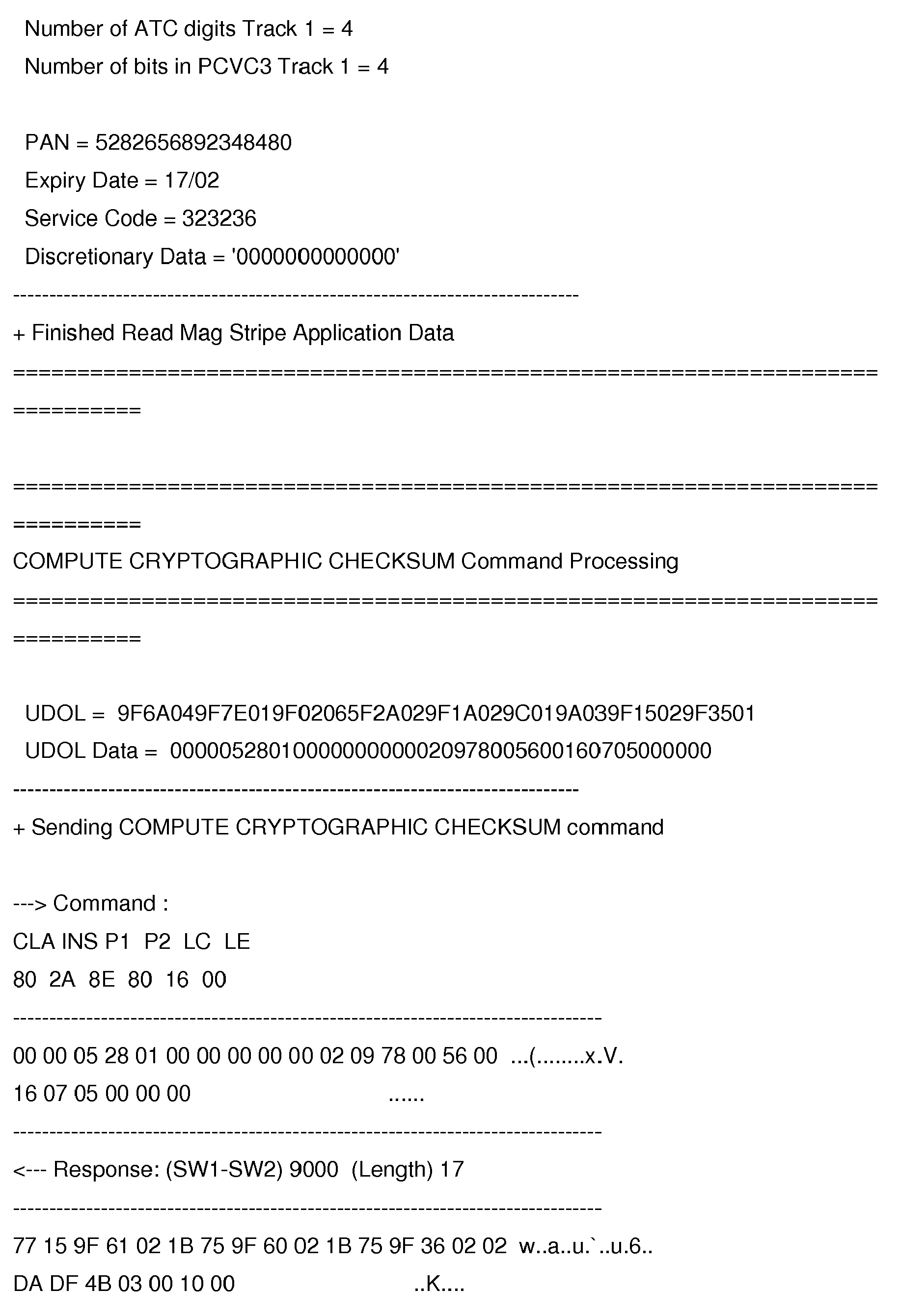

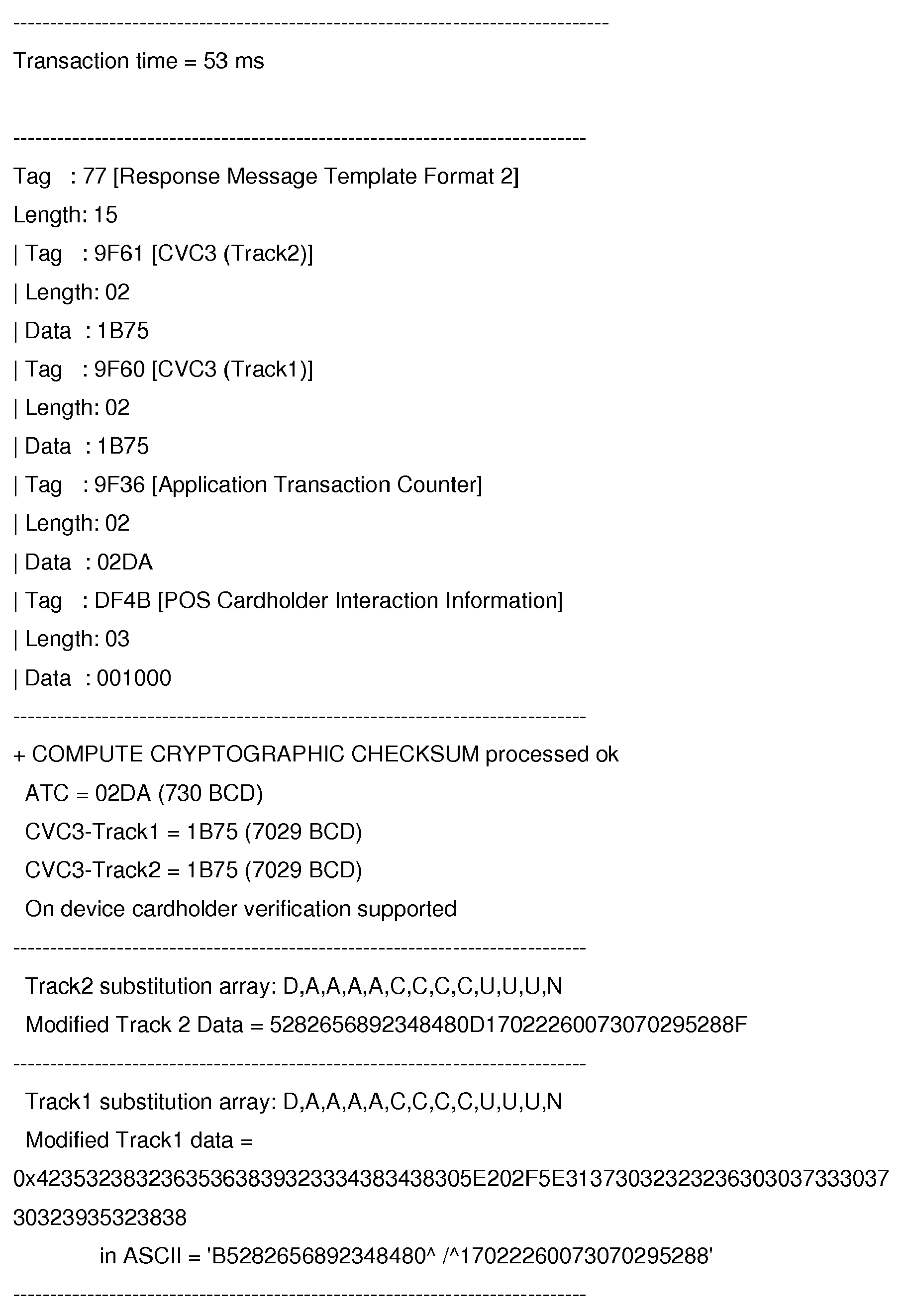

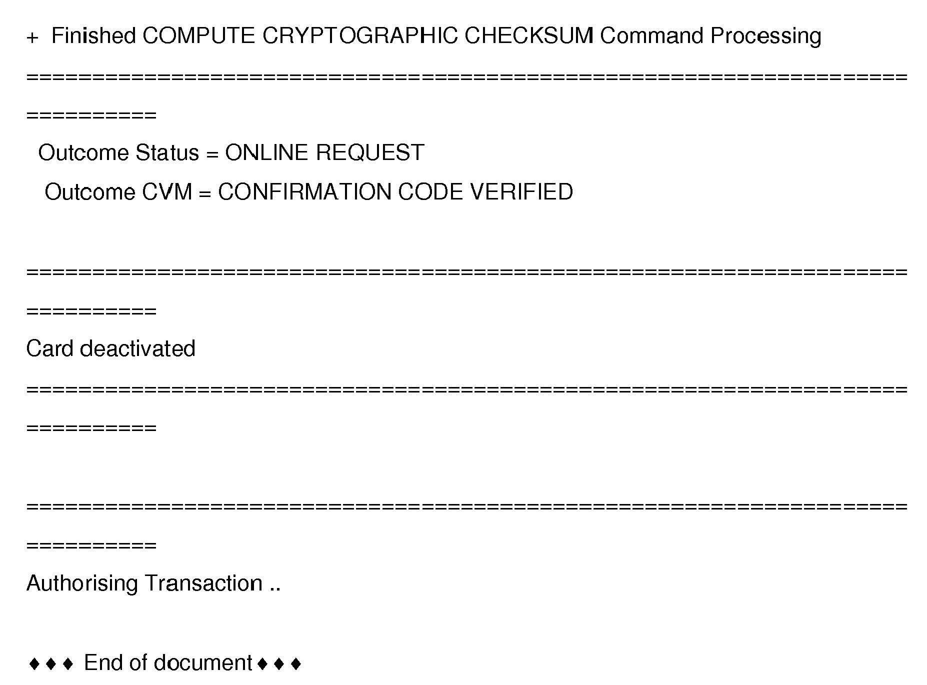

## Claims

1. A method for conducting a transaction, comprising the steps of:
converting identifying data relating to a transaction into a code for display on a screen of a mobile device;
displaying the code on the screen of the mobile device;
reading the displayed code at a point of sale device;
determining the identifying data relating to the transaction, based on the code read by the point of sale device; and
processing the transaction using the identifying data relating to the transaction.

2. The method of claim 1, wherein the code displayed on the screen of the mobile device is a second code, and the method comprises the steps of:
displaying a first code on a screen of the point of sale device, including embedded data;
reading the first code displayed on the screen of the point of sale device using a camera on the mobile device;
extracting the embedded data at the mobile device; and
performing the steps of converting identifying data relating to a transaction into the second code and displaying the second code on the screen of the mobile device responsive to extraction of the embedded data.

3. The method of claim 2 wherein the camera on the mobile device is front-facing.

4. The method of claim 2 wherein the first code is static.

5. The method of claim 2 wherein the first code is dynamic.

6. The method of any of the preceding claims wherein the first code and/or the second code is a two-dimensional barcode.

7. The method of any of the preceding claims wherein the mobile device is configured to reduce the size of the data carried using the code, and wherein the point of sale device is configured to reconstruct the entire set of data, based on the reduced size of the data and using one or more templates defining the fields to be populated.

8. A system configured to process a transaction between the user of a mobile phone and a point of sale device, comprising:
a mobile device having a screen, wherein the mobile device comprises one or more processors configured to convert identifying data relating to a transaction into a first code and to display the first code on the screen of a mobile device;
a point of sale device comprising an optical reader configured to read the displayed first code using the optical reader and one or more processors configured to determine the identifying data relating to the transaction, based on the first code, and to process the transaction using the identifying data relating to the transaction.

9. A computer readable storage medium configured to store computer executable code that when executed by a computer configures the computer to:
convert identifying data relating to a transaction into a first code for display on a screen of a mobile device;
display the first code on the screen of the mobile device;
read the displayed first code at a point of sale device;
determine the identifying data relating to the transaction, based on the first code read by the point of sale device; and
process the transaction using the identifying data relating to the transaction.

10. A method substantially as herein described with reference to the accompanying drawings.

11. A system substantially as herein described with reference to and/or as illustrated in the accompanying drawings.
